(19) **Europäisches Patentamt / European Patent Office / Office européen des brevets**

(11) **EP 3 278 097 B1**

(12) **FASCICULE DE BREVET EUROPEEN**

(45) Date de publication et mention
de la délivrance du brevet:
**04.05.2022 Bulletin 2022/18**

(21) Numéro de dépôt: **16714817.0**

(22) Date de dépôt: **25.03.2016**

(51) Classification Internationale des Brevets (IPC):
**G01N 29/30** *(2006.01)*   **G01N 29/44** *(2006.01)*
**G01N 29/48** *(2006.01)*

(52) Classification Coopérative des Brevets (CPC):
**G01N 29/30; G01N 29/4463; G01N 29/449;
G01N 29/48;** G01N 2291/044

(86) Numéro de dépôt international:
**PCT/EP2016/056698**

(87) Numéro de publication internationale:
**WO 2016/156262 (06.10.2016 Gazette 2016/40)**

(54) **OUTILS POUR L'ETALONNAGE D'UN DISPOSITIF DE CONTROLE PAR ULTRASONS**

WERKZEUGE ZUR KALIBRIERUNG EINER ULTRASCHALLINSPEKTIONSVORRICHTUNG

TOOLS FOR CALIBRATION OF ULTASONIC INSPECTION DEVICES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **31.03.2015   FR 1552770**

(43) Date de publication de la demande:
**07.02.2018 Bulletin 2018/06**

(73) Titulaire: **Vallourec Tubes France
92190 Meudon (FR)**

(72) Inventeur: **NOEL, Alexandre
59144 Gommegnies (FR)**

(74) Mandataire: **Casalonga
Casalonga & Partners
Bayerstraße 71/73
80335 München (DE)**

(56) Documents cités:
**US-A- 4 757 716     US-A1- 2007 186 655**

**Description**

L'invention concerne le domaine des contrôles non destructifs de produits métallurgiques, en particulier de profilés de longueur importante, typiquement comprise entre quelques mètres et plusieurs dizaines de mètres.

Pour mieux faire comprendre l'invention, celle-ci est décrite dans le contexte de produits généralement tubulaires, notamment des tubes, en tant qu'exemples de produits métallurgiques. Pour autant, l'invention a vocation à s'appliquer plus largement.

Des tubes de grande longueur sont largement utilisés. Comme domaines d'application, on peut citer par exemple la production électrique, où l'on utilise des tubes dits "chaudières", aussi connus par l'équivalent anglais de "boilers", le pétrole et le gaz, où l'on emploie des tubes pour le forage, l'extraction et le transport ("line pipes"), ou encore la construction mécanique, que ce soit en génie civil ou dans les secteurs de l'automobile et de l'aéronautique.

Comme la plupart des produits métallurgiques, les tubes sont susceptibles de présenter des défauts liés à leur fabrication, tels que des inclusions de matière dans l'acier ou des absences de matière par exemple. De manière générale, toute hétérogénéité dans la matrice d'acier est vue comme une imperfection qui est susceptible de nuire à la résistance mécanique du tube en service.

C'est pourquoi on contrôle les tubes métalliques dès après leur fabrication, non seulement pour y détecter d'éventuels défauts, mais aussi, le cas échéant, pour déterminer des informations utiles à l'évaluation de la dangerosité de ces défauts, notamment leur taille, leur profondeur, leur position, leur nature ou encore leur orientation.

Lorsqu'on fabrique un lot de tubes, il est souhaitable d'en contrôler le plus grand nombre, et le plus sûrement possible. Certains acteurs du domaine, comme la Demanderesse, contrôlent individuellement chaque tube produit.

Dès lors, le contrôle d'un tube représente une étape de sa fabrication, au même titre que celles, plus classiques, de mise en forme notamment.

Parce qu'ils influent la cadence de production, les procédés de contrôle mis en œuvre se doivent d'être économiques, rapides, tout en demeurant fiables. On recherche des procédés de contrôle pratiquement automatiques.

On utilise en particulier des techniques de contrôle à l'aide d'ondes ultrasonores. On fait se propager des ondes ultrasonores dans le tube contrôlé, et l'on recherche, parmi les échos résultants, ceux qui ne peuvent être imputés à la géométrie du tube. Les inclusions ou les absences de matière constituent des variations au sein du milieu de propagation de l'onde, et génèrent de ce fait des échos lorsqu'ils sont frappés par des ondes ultrasonores. Ces variations peuvent être vues comme des imperfections.

L'intensité de l'écho produit par une imperfection dépend de l'angle selon lequel l'onde la frappe. Pour une direction de propagation de l'onde ultrasonore dans le tube, on détecte principalement les imperfections orientées de manière correspondante, c'est-à-dire perpendiculairement à la direction de propagation, avec une certaine tolérance toutefois, de l'ordre d'un ou deux degrés.

En pratique, les imperfections ne sont pas purement longitudinales ou transversales, mais renvoient un écho plus ou moins important dans l'une ou l'autre de ces directions. L'orientation d'une imperfection peut être assimilée à sa plus grande surface de réflexion.

On qualifie de défaut une imperfection qui renvoie un écho d'amplitude supérieure à une valeur-seuil. On associe généralement à ce défaut une valeur d'orientation, qui peut se déduire de la direction d'inspection.

Par exemple, on appelle, dans la technique, défaut longitudinal toute imperfection qui génère, en réponse à un tir d'orientation correspondante, un écho d'amplitude supérieure à une valeur prédéfinie. Cette valeur-seuil est fixée par étalonnage. On utilise classiquement en tant que défauts de référence, ou défauts-étalons, des entailles de position (profondeur et orientation) et de dimensions connues, le plus souvent normalisées, ménagées dans un tube-échantillon.

La durée du contrôle dépend principalement du temps nécessaire au trajet des ondes ultrasonores dans le tube, aller et retour, et, dans une certaine mesure, de celui du traitement des signaux captés en retour.

Pour concilier les impératifs liés aux cadences de production et à la sécurité, on a pris l'habitude de limiter le nombre de tirs d'ultrasons et de ne rechercher, dans chaque tube, que les défauts présentant certaines orientations particulières.

Classiquement, on cherche à détecter les défauts les plus fréquents, généralement les défauts orientés parallèlement à la génératrice du tube.

De récents développements dans la technique visent des procédés de contrôle permettant en plus la détection de défauts orientés différemment, tout en limitant le nombre de tirs pour conserver une cadence de contrôle acceptable.

On connaît par WO 2003/50527 par exemple une installation de contrôle non destructif pour des produits métallurgiques dans laquelle on utilise un capteur de type "phased array" de dimension une. Chaque élément transducteur est excité une fois puis un circuit de traitement analyse la réponse globale du tube à cette unique émission, que l'on appelle un "tir" dans la technique. À partir d'un tir effectué selon la direction transversale du tube, on est capable de déterminer la présence non seulement de défauts disposés perpendiculairement à cette direction, mais également de défauts présentant une inclinaison par rapport à cette direction perpendiculaire comprise entre plus et moins 20°.

En pratique, on utilise trois capteurs : deux capteurs dédiés à la détection de défauts orientés longitudinalement ou présentant une inclinaison par rapport à cette direction longitudinale comprise entre plus et moins 20°, et un capteur supplémentaire pour détecter les défauts orientés transversalement au tube et/ou mesurer l'épaisseur de ce tube.

On connaît également par FR 3 000 212, au nom de la Demanderesse, un dispositif de contrôle ultrasonore capable d'inspecter un produit métallurgique en y détectant des défauts de toute orientation. Le dispositif en question utilise un unique capteur, excité un nombre réduit de fois, ce qui permet de conserver une bonne cadence de contrôle.

En outre on connaît par US 4 757 716 un dispositif de contrôle ultrasonore capable d'inspecter un produit métallurgique en immersion en utilisant des blocs d'étalons percés de trous débouchant.

En particulier, il est possible de détecter à l'aide de cet unique capteur et d'un nombre limité de tirs, des défauts transversaux, également qualifiés de "circonférentiels", c'est-à-dire des défauts s'étendant perpendiculairement à la génératrice du tube, des défauts longitudinaux, qui s'étendent suivant cette génératrice, et des défauts faisant un angle quelconque avec la génératrice du tube à contrôler. Le gain de productivité et de fiabilité est manifeste.

Contrôler des tubes quant à l'existence de défauts de multiples orientations, voire d'orientation quelconque, implique d'étudier la réponse d'un tube à des ondes ultrasonores se propageant selon des directions respectives différentes les unes des autres, de manière à couvrir toutes les orientations possibles.

Ceci complexifie grandement l'étalonnage du dispositif de contrôle, au moins en ce qu'une valeur-seuil doit être réglée pour chaque direction inspectée, généralement la même.

Le nombre de défauts-étalons, ou d'entailles, à réaliser dans le tube-échantillon dépend directement du nombre de directions inspectées : en l'absence de symétrie de ces directions, on a théoriquement besoin d'autant d'entailles que de directions inspectées, tandis que des directions d'inspections mutuellement symétriques permettent d'utiliser une même entaille pour étalonner un dispositif de contrôle selon deux directions d'inspections.

Néanmoins, inspecter des tubes à la recherche de défauts d'orientation quelconque nécessite aujourd'hui un tube-échantillon doté de nombreuses entailles, ce qui le rend compliqué à fabriquer et de fait très coûteux. À titre d'exemple, on utilise aujourd'hui un tube-échantillon doté de soixante-douze entailles, à savoir trente-six entailles sur la surface externe du tube, régulièrement d'inclinées par rapport à la génératrice du tube, et autant sur la surface interne. En outre, plus il y a d'entailles plus l'étalonnage est long et complexe, notamment du fait des opérations manuelles nécessaires, telles que le positionnement du capteur par rapport aux entailles, par exemple.

L'invention vise à améliorer la situation.

On propose un module d'aide à l'étalonnage d'un dispositif de contrôle de produits métallurgiques selon la revendication 1.

Le module proposé utilise des données mesurées pour des inspections ultrasonores réalisées sur un réflecteur poly-directionnel et sur un ou plusieurs réflecteurs directionnels. Il utilise moins de réflecteurs directionnels qu'il existe de directions à étalonner : les directions d'inspection qui ne correspondent à aucune direction de travail d'un réflecteur directionnel sont étalonnées à l'aide des amplitudes mesurées avec le réflecteur poly-directionnel, pour une direction de travail correspondante. Ceci permet d'utiliser les réflecteurs directionnels, en particulier les entailles, comme défauts-étalons, dont les caractéristiques géométriques peuvent, le cas échéant, faire l'objet d'une spécification, tout en diminuant leur nombre. Ceci permet d'utiliser un ou plusieurs défauts-étalon quelle que soit leur orientation dans le tube pour étalonner une pluralité de directions d'inspection.

On propose également un procédé d'aide à l'étalonnage d'un dispositif de contrôle de produits métallurgiques, selon la revendication 12.

On propose enfin un produit de programme informatique selon la revendication 13.

D'autres caractéristiques et avantages de l'invention apparaîtront à l'examen de la description détaillée ci-après, et des dessins annexés sur lesquels :

- les figures 1 et 2 montrent une installation de contrôle de produits métallurgiques, vue respectivement de face et de côté ;

- la figure 3 montre des défauts-étalons d'un premier type dans un tube-échantillon, en vue de dessus ;

- les figures 4 et 5 montrent un défaut-étalon d'un second type dans un tube-échantillon, en vue de dessus et en coupe selon une ligne V-V, respectivement ;

- la figure 6 montre schématiquement un module d'aide à l'étalonnage d'un dispositif de contrôle de produits métallurgiques ;

- la figure 7 représente un ordinogramme qui illustre une fonction d'étalonnage à usage dans le module de la figure 6 ;

- la figure 8 représente un ordinogramme qui illustre une fonction de traitement statistique à usage dans le module de la figure 6 ;

- La figure 9 représente un ordinogramme qui illustre une fonction comparative à usage dans le module de la figure 6 ;

- La figure 10 représente un ordinogramme qui illustre une fonction d'interpolation à usage dans le module de la figure 6 ;

- La figure 11 est analogue à la figure 10 et concerne une autre fonction de simulation ;

- La figure 12 représente un ordinogramme qui illustre une fonction de conversion à usage dans le module de la figure 6 ;

- La figure 13 représente un ordinogramme qui illustre une fonction d'extraction à usage dans le module de la figure 6 ;

- La figure 14 représente un graphique qui illustre la fiabilité du module de la figure 6 ;

- La figure 15 est analogue à la figure 14.

Les dessins et les annexes comprennent des éléments de caractère certain. Ils pourront donc non seulement servir à la description de l'invention mais encore à sa définition, le cas échéant.

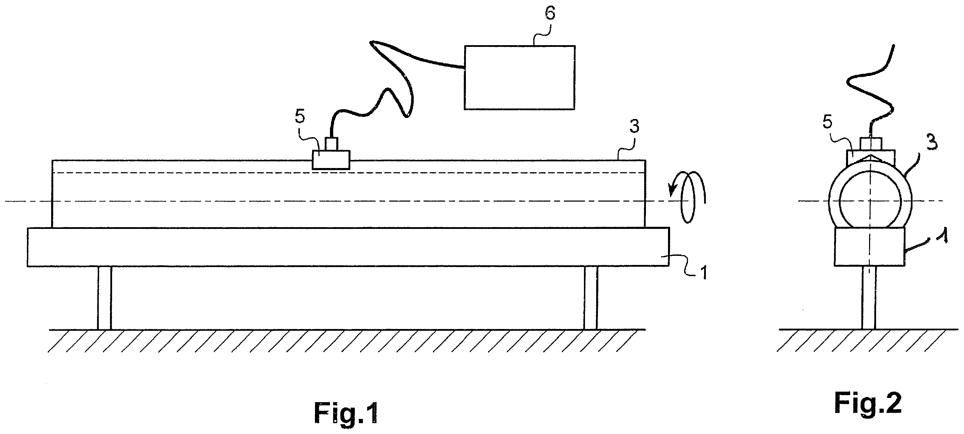

On fait référence aux figures 1 et 2.

Une installation de contrôle par ondes ultrasonores comprend un banc 1 supportant un tube métallique 3 à contrôler et un capteur ultrasonore 5, appliqué contre la surface périphérique du tube 3, et relié à une électronique de commande et de traitement 6. Le capteur ultrasonore 5 est parfois désigné "traducteur" dans la technique.

Pour le contrôle, le capteur 5 et le tube 3 sont en déplacement relatif hélicoïdal. Ici, le tube 3 se déplace par rapport au banc 1 selon un mouvement hélicoïdal autour d'un axe correspondant à son axe longitudinal, tandis que le capteur 5 est maintenu en position par rapport au banc 1. Le banc 1 peut être équipé de galets rotatifs inclinés par rapport à l'axe longitudinal du tube 3.

En variante, le tube 3 peut être animé d'un mouvement de rotation uniquement par rapport au banc 1, tandis que le capteur 5 coulisse selon la direction longitudinale du banc 1. Le capteur 5 peut être monté sur un charriot mobile par rapport au banc 1. Selon une autre variante encore, le capteur 5 peut tourner autour du tube 3, tandis que ce dernier est translaté par rapport au banc 1.

Le mouvement relatif hélicoïdal entre le capteur 5 et le tube 3 permet de contrôler l'ensemble du tube 3 à l'aide d'un capteur 5 d'envergure réduite par rapport à la circonférence du tube 3. On pourrait en remplacement prévoir un nombre plus important de capteurs, disposés en couronne autour du tube 3, et assurer une séquence de tir qui garantisse un recouvrement lorsque le tube 3 coulisse par rapport au capteur 5.

Un milieu de couplage, ou "couplant" dans la technique, peut être intercalé entre le capteur 5 et la surface périphérique du tube 3, par exemple sous forme de gel. En variante, l'installation peut comprendre un caisson rempli d'eau, ou de tout autre médium de couplage liquide, dans lequel sont immergés le tube 3 et le capteur 5.

L'installation est destinée à inspecter le tube 3 pour y vérifier l'existence de défauts d'orientations différentes les unes des autres, en particulier d'orientation quelconque. La direction d'une d'inspection correspond à l'orientation, dans le tube 3, des défauts recherchés.

Pour contrôler le tube 3 selon différentes directions d'inspection, on peut réaliser plusieurs tirs ultrasonores : chaque tir ultrasonore consiste à générer à l'aide du capteur 5 des ondes ultrasonores qui vont se propager dans le tube 3 principalement suivant une direction qui correspond à la direction d'inspection. On peut aussi utiliser un dispositif du type décrit dans la demande de brevet français FR 3 000 212, dispositif qui permet d'inspecter le tube selon plusieurs directions différentes les unes des autres avec un unique tir ultrasonore.

Pour pouvoir distinguer, dans les réponses du tube 3, des échos résultant de défauts de ceux résultant d'imperfections, l'installation de contrôle doit être étalonnée, pour chacune des directions d'inspection.

Par exemple, l'installation est destinée à contrôler le tube 3 quant à l'existence de défauts d'orientation quelconque en inspectant 72 directions régulièrement réparties sur 360°: les directions d'inspection sont inclinées les unes des autres d'un pas angulaire de 5°.

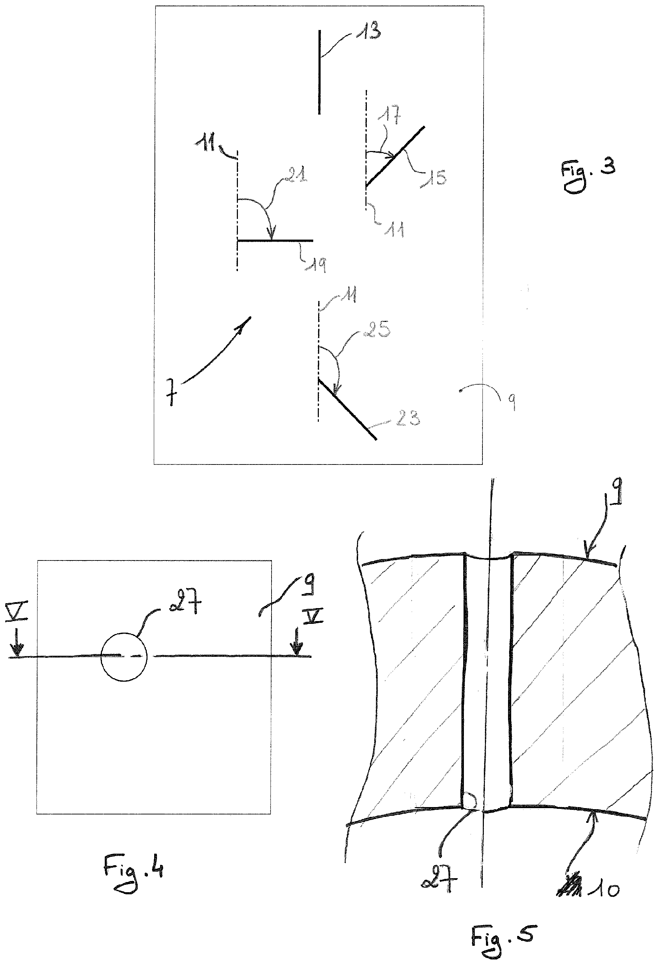

On fait référence aux figures 3 à 5.

Pour étalonner une installation de contrôle de produits métallurgiques par ondes ultrasonores, par exemple du type de celle décrite en relation avec les figures 1 et 2, on fait opérer l'installation sur un produit-échantillon, ou produit de référence, ici un tube, représentatif du point de vue du contrôle, des produits à contrôler. Par exemple, le tube-échantillon prend la place du tube 3 décrit en relation avec les figures 1 et 2.

Le tube-échantillon présente des valeurs de diamètre et d'épaisseur analogues à un modèle de tube. Le tube-échantillon peut en outre être réalisé en un matériau identique, ou du moins analogue, à celui du modèle, typiquement en une même nuance d'acier ou une nuance appartenant à un même groupe de nuances. De manière générale, un modèle de tube est destiné à une application particulière, à laquelle le matériau du tube et le traitement thermique qu'il subit sont adaptés. En particulier, le tube-échantillon vérifie les conditions énoncées au paragraphe 6, intitulé "Reference tube", de la norme EN ISO 10893-10, notamment les paragraphes 6.1.3 et 6.1.4, ou analogue.

En pratique, on prévoit classiquement au moins un tube-échantillon par application.

Le tube-échantillon est muni d'entailles allongées d'un premier type, ou premières entailles, désignées dans leur ensemble par le numéro de référence 7. Les entailles allongées 7 sont réalisées dans la paroi du tube-échantillon, depuis la surface extérieure 9 (entailles externes) ou la surface intérieure 10 (entailles internes) de ce dernier. Chacune des premières entailles 7 présente une orientation respective dans le tube. Cette orientation est par exemple définie par rapport à une génératrice 11 du tube-échantillon. L'orientation d'une entaille peut être définie par l'inclinaison de son axe longitudinal par rapport à la génératrice 11 du tube-échantillon, dans un plan tangent à la surface extérieure de ce dernier.

Ici les orientations respectives des premières entailles 7 sont telles que ces entailles 7 sont régulièrement inclinées les unes par rapport aux autres de manière à couvrir une plage angulaire d'environ 180° dans le tube-échantillon. Les premières entailles 7 sont régulièrement réparties de manière angulaire pour couvrir le secteur angulaire considéré, ici 180°. Le tube-échantillon présente par exemple quatre entailles extérieures 7, orientées comme suit :

- une première entaille, ou entaille longitudinale 13, qui s'étend suivant la génératrice 11 du tube-échantillon, c'est-à-dire dont l'angle d'inclinaison Alpha_1 par rapport à cette génératrice est voisin de 0 ;
- une seconde entaille, ou première entaille oblique 15, qui s'étend suivant une direction inclinée d'un angle Alpha_2 17, ici de 45° environ, par rapport à la génératrice 11 du tube-échantillon ;
- une troisième entaille, ou entaille transversale 19, qui s'étend perpendiculairement à la génératrice 11 du tube-échantillon, ou selon un angle Alpha_3 21 voisin de 90°; et
- une quatrième entaille, ou seconde entaille oblique 23, qui s'étend suivant une direction inclinée d'un angle Alpha_4 25, ici d'environ 135°, par rapport à la génératrice 11 du tube-échantillon.

À l'exception de leur orientation respective dans le tube-échantillon, les premières entailles 7 sont analogues les unes aux autres, en particulier en ce qui concerne leur profondeur, leur section transversale et leur longueur, ce qui va simplifier l'étalonnage.

Les dimensions des premières entailles peuvent être fixées par un cahier des charges, en particulier établi par l'acheteur du tube. Par défaut, comme c'est le cas ici, les premières entailles 7 peuvent être du type décrit dans la norme EN ISO 10893-10, en particulier en son paragraphe 6, ou analogue.

Le tube-échantillon est en outre muni d'au moins un premier orifice ménagé dans sa paroi et débouchant sur la surface extérieure 9 ou la surface intérieure 10 du tube. En profondeur, le premier orifice s'étend sur au moins 5% de l'épaisseur du tube. Le premier orifice prend ici la forme d'un perçage radial 27 de section circulaire. Le perçage radial 27 débouche ici en outre sur la surface intérieure 10 du tube-échantillon.

Le tube-échantillon peut en outre être muni d'entailles allongées d'un second type (non représentées), ou secondes entailles, ménagées dans la paroi de ce tube et ouvertes sur la surface extérieure 9 ou la surface intérieure 10 du tube, à l'inverse des premières entailles 7. Les secondes entailles peuvent être analogues aux premières entailles 7, en particulier en ce qui concerne leur nombre, leur orientation respective, leur forme et/ou leur longueur.

Le tube-échantillon peut encore présenter un orifice supplémentaire, ménagé dans sa paroi et débouchant sur sa surface intérieure 10 ou extérieure 9, inversement au premier orifice. L'orifice supplémentaire s'étend, en profondeur, sur au moins 5% de l'épaisseur du tube -échantillon 7. L'orifice supplémentaire peut être confondu avec le premier orifice, comme c'est le cas pour le perçage radial 27 représenté en figure 5.

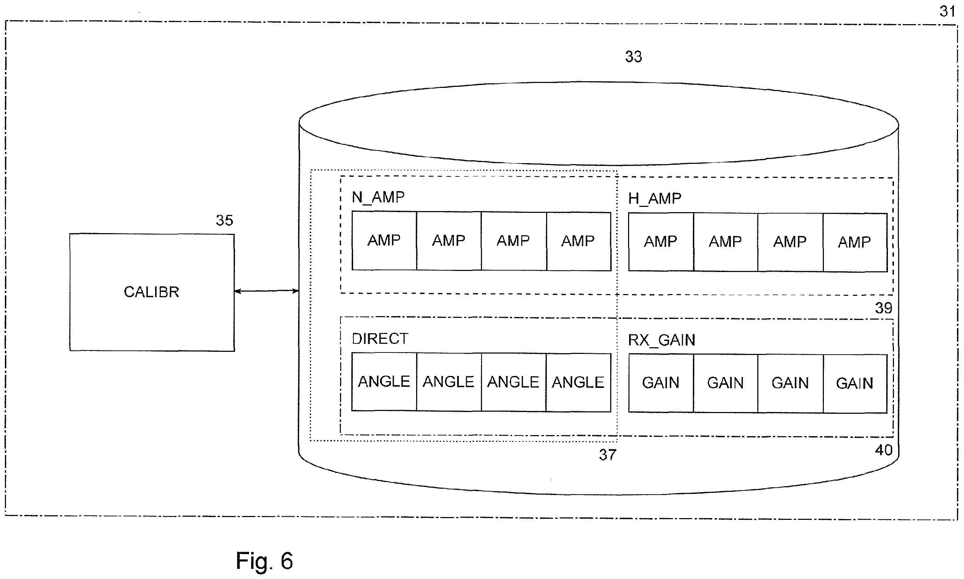

La figure 6 montre un module 31 d'aide à l'étalonnage destiné à un dispositif de contrôle de produits métallurgiques, par exemple l'installation de contrôle 6 décrite en relation avec les figures 1 et 2.

Le module 31 comprend de la mémoire 33 organisée pour stocker des données de travail, relatives à au moins un tube-échantillon, tel que par exemple le tube-échantillon mentionné en relation avec les figures 3 à 5. Ces données de travail comprennent en particulier des données résultant de mesures ultrasonores réalisées avec le dispositif de contrôle à étalonner, par exemple le dispositif 1 décrit en relation avec les figures 1 et 2. Les mesures en question sont réalisées sur un tube-échantillon dans lequel sont ménagés des réflecteurs ultrasonores.

Le module 31 comprend en outre un calculateur qui exécute une fonction de traitement, ou fonction CALIBR 35, qui travaille sur les données de la mémoire 33 en vue d'obtenir des données utiles à l'étalonnage du dispositif de contrôle. Ces données utiles peuvent être stockées, au moins temporairement, dans la mémoire 33.

La mémoire 33 est organisée de manière à stocker certaines au moins des données de travail relatives au tube-échantillon sous la forme de couples valeur/angle. Chaque couple désigne une amplitude de réflexion d'une onde ultrasonore associée à un paramètre directionnel. Le paramètre directionnel correspond à une direction d'inspection, c'est-à-dire une direction générale de propagation du faisceau d'ondes ultrasonore dans le tube. Le paramètre directionnel comprend par exemple une valeur angulaire qui caractérise la direction d'inspection par rapport à une référence commune, telle qu'un angle d'inclinaison par rapport à la génératrice du tube-échantillon.

La mémoire 33 est organisée de manière à regrouper les couples valeurs/angle en jeux de données, où chaque jeu de données caractérise la réponse, ou le retour, d'un réflecteur ultrasonore respectif, ou d'un ensemble de réflecteurs ultrasonores respectifs, à un ou plusieurs faisceaux ultrasonores dirigés, le cas échéant, de manière différente par rapport au tube-échantillon. Chaque couple valeur/angle correspond à une amplitude de la réponse du réflecteur ultrasonore à une inspection dirigée d'une manière correspondant à l'angle du couple.

La mémoire 33 est organisée de manière à stocker au moins un premier jeu de données relatif à un réflecteur directionnel, ou à un ensemble de réflecteurs directionnels, désignées ici données UNISET 37, et au moins un second jeu de données relatif à un réflecteur poly-directionnel, ou données OMNISET 39.

Un réflecteur directionnel répond aux ondes ultrasonores principalement dans une direction, ou direction de travail. Dit autrement, un réflecteur unidirectionnel est conformé de manière telle qu'il réponde à une onde ultrasonore principalement lorsque la direction de propagation de celle-ci correspond à la direction de travail du réflecteur directionnel. Des entailles allongées, ménagés dans un produit, telles que les entailles 7 décrites en relation avec la figure 3, sont des exemples de réflecteurs directionnels : chaque entaille 7 répond principalement aux faisceaux ultrasonores qui la rencontrent perpendiculairement à sa direction longitudinale, selon sa direction de travail.

En pratique, l'ensemble des réponses d'un réflecteur directionnel à des inspections ultrasonores réalisées selon des directions différentes les unes des autres, comprend une valeur d'amplitude grandement supérieure aux autres valeurs, cette valeur supérieure étant obtenue pour une direction d'inspection qui correspond à la direction de travail du réflecteur directionnel dans le tube.

Un réflecteur poly-directionnel répond de manière analogue à des ondes ultrasonores qui le rencontrent selon de nombreuses directions différentes. L'amplitude de la réponse est voisine pour la plupart des directions d'inspection. Un orifice de section circulaire, tel que notamment le perçage 27 décrit en relation avec les figures 4 et 5, représente un exemple de réflecteur poly-directionnel : le perçage 27 répond sensiblement de la même manière à tous les faisceaux ultrasonores qui le rencontrent perpendiculairement à son axe. D'une certaine manière, le perçage 27 peut de ce fait être vu également comme un orifice omnidirectionnel.

Ici, les réflecteurs directionnels, par exemple les entailles 7 de la figure 3, sont orientées dans le tube-échantillon de manière que leur direction de travail corresponde à la direction d'un tir d'inspection. Le réflecteur poly-directionnel, par exemple le perçage 27, est orienté dans le tube échantillon de manière que certaines au moins de ces directions de travail correspondent chacune à une direction d'un tir d'inspection respectif. De préférence, le réflecteur poly-directionnel est conformé et orienté dans le tube-échantillon de manière que chaque direction d'inspection corresponde à l'une de ses directions de travail. C'est le cas, en particulier, avec un réflecteur omnidirectionnel du type du perçage 27 par exemple.

Le jeu UNISET 37 comprend, pour chaque réflecteur directionnel, au moins un couple valeur/angle correspondant à une valeur d'amplitude de retour du réflecteur pour un tir ultrasonore dirigé d'une manière correspondant à la direction de travail du réflecteur dans le tube-échantillon. Vu autrement, le couple valeur/angle correspond à la réponse d'un réflecteur directionnel orienté dans le tube-échantillon de manière que sa direction de travail corresponde à la direction d'inspection définie par la valeur de l'angle.

Les deux colonnes de gauche du tableau 1.1 illustrent le contenu d'un jeu de données du type du jeu UNISET 37 pour quatre entailles ménagés en surface intérieure d'un tube-échantillon, et orientées de manière que leur direction longitudinale soit respectivement inclinée de 0, 45, 90 et 135 degrés par rapport à la génératrice de ce tube. Il s'agit par exemple des entailles 13, 15, 19 et 23 décrites en relation avec la figure 3. Les données des annexes correspondent à un tube-échantillon de 231 millimètres de diamètre et 10 millimètres d'épaisseur. Les amplitudes sont exprimées de manière relative, en pourcentage. Le gain initial est de 35 décibels. Les entailles sont ici parallélépipédiques, avec un profil en U

À chaque ligne, une valeur d'amplitude est relative à la réponse d'une entaille respective à une inspection ultrasonore dirigée, par rapport à la génératrice du tube, d'une manière correspondant à l'orientation de l'entaille en question dans le tube. Chaque ligne concerne une direction d'inspection qui correspond à la direction de travail d'un réflecteur directionnel. Une entaille présente deux grandes interfaces air/acier qui forment deux réflecteurs directionnels, orientés symétriquement l'un de l'autre. Les deux colonnes de gauche de chaque ligne du tableau 1.1 montrent bien un couple valeur/angle pour un réflecteur directionnel respectif. Les lignes correspondant aux angles 45° et 225°, par exemple, concernent une même entaille, analogue à l'entaille 15 de la figure 3.

La colonne de gauche du tableau 1.1 et celle de droite illustrent un contenu supplémentaire, complémentaire ou de remplacement de jeu de données UNISET 37 relatif à quatre entailles ménagées en surface extérieure du tube-échantillon, et orientées de manière analogue aux entailles intérieures du tableau. Il s'agit par exemple des entailles 13, 15, 19 et 23 décrites en relation avec la figure 3.

Le jeu OMNISET 39 comprend une pluralité de couples valeur/angle correspondant chacun à une valeur d'amplitude de retour du réflecteur poly-directionnel pour une onde ultrasonore dirigée de manière correspondant à une direction de travail, dans le tube, du réflecteur poly-directionnel. Vu autrement, chaque couple valeur/angle correspond à la réponse du réflecteur poly-directionnel à une direction d'inspection définie par la valeur angulaire, et correspondant à une direction de travail de ce réflecteur.

Les deux colonnes de gauche du tableau 1.2 illustrent le contenu d'un jeu de données du type du jeu OMNISET 37 pour un orifice de section circulaire qui s'étend radialement dans l'épaisseur du tube échantillon, ici de la surface extérieure de celui-ci à sa surface intérieure. L'orifice en question est du type de l'orifice 27 décrit en relation avec la figure 4. Les deux colonnes en question concernent plus particulièrement la partie de l'orifice qui se trouve à proximité de la surface intérieure du tube. De ce fait, elles peuvent être vues comme un exemple de données OMNISET pour un réflecteur poly-directionnel ménagé en surface intérieure du tube. La colonne de gauche rassemble les directions d'inspection, également réparties sur 360°, avec un pas de 5°.

À chaque ligne, une valeur d'amplitude est relative à la réponse de l'orifice à une inspection ultrasonore dirigée, par rapport à la génératrice du tube, d'une manière correspondant à l'angle indiqué.

La colonne de gauche du tableau de l'annexe 1.2 et celle de droite illustrent un contenu supplémentaire, complémentaire ou de remplacement du jeu de données OMNISET 39, relatif à la partie de l'orifice qui s'étend à proximité de la surface extérieure du tube.

Les données UNISET 37 et OMNISET 39 peuvent être rassemblées dans des tableaux respectifs de la mémoire 33. Dans ce cas, par exemple, chaque ligne d'un tableau respectif pointe vers un angle tandis que la colonne correspondante pointe vers une valeur.

La mémoire 33 est organisée de manière à stocker en outre des données-résultats, ou d'étalonnage, relatives au tube-échantillon sous la forme de couples valeur/angle. Chaque couple désigne un gain en réception associé à un paramètre directionnel. Le paramètre directionnel correspond à une direction d'inspection à étalonner. Les données-résultats sont ici rassemblées en un jeu de données, désigné ici RESULSET 40.

Dans l'exemple de réalisation de la figure 6, la mémoire 33 maintient un tableau indexé de dimension N (entier naturel) qui rassemble les directions d'inspection, ou tableau DIRECT[ ]. Chaque élément du tableau DIRECT[ ] vaut pointeur vers un angle, lequel définit une direction d'inspection respective, par exemple en tant qu'inclinaison par rapport à la génératrice du tube dans un plan tangent à ce dernier. Ici, le nombre N de directions inspectées, et les angles, correspondent aux directions qui seront inspectées après l'étalonnage, c'est-à-dire aux directions étalonnées.

Les données des jeux UNISET 37 et OMNISET 39 sont rassemblées dans des tableaux indexés respectifs, en particulier de même dimension N que le tableau DIRECT[ ]. Par exemple, le jeu UNISET 37 comprend un tableau d'amplitude N_AMP[ ] relatif aux réponses de réflecteurs directionnel, tandis que le jeu OMNISET 39 comprend tableau d'amplitudes H_AMP[ ] relatif aux réponses du réflecteur poly-directionnel. Chaque élément des tableaux N_AMP[ ] et H_AMP[ ] vaut pointeur vers une valeur correspondant à l'amplitude de la réponse du réflecteur concerné dans une direction d'inspection correspondant à l'angle qui partage la valeur d'index dans le tableau DIRECT[ ].

Les données RESULSET 40 sont rassemblées dans un tableau indexé de dimension N, ici un tableau de gains RX_GAIN[ ], dont chaque élément vaut pointeur vers une valeur correspondant au gain à régler en réception dans une direction d'inspection correspondant à l'angle qui partage la valeur d'index dans le tableau DIRECT[ ].

La fonction CALIBR 35 admet, en tant que paramètres, des données définissant un ensemble de directions d'inspection, à usage pour le contrôle en phase de production. Il s'agit des directions à étalonner. Les données reçues peuvent comprendre un ensemble de valeurs angulaires correspondant à des directions d'inspection, ou une valeur entière en tant que nombre de directions à inspecter sur un secteur angulaire d'étendue prédéfinie, par exemple 180°. L'étendue du secteur angulaire peut aussi être reçue en tant que paramètre de la fonction CALIBR 35.

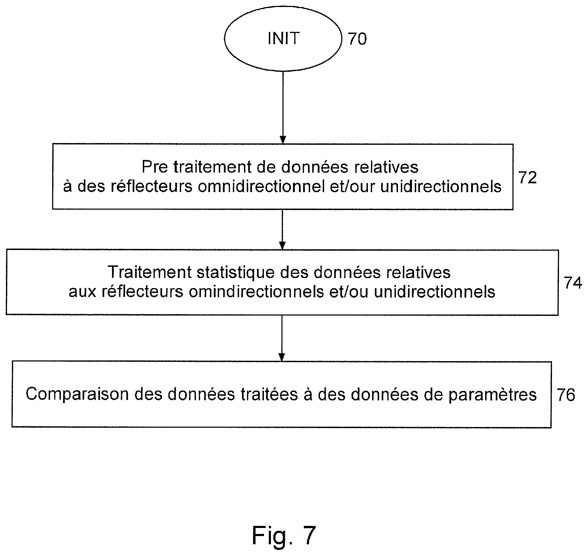

La figure 7 illustre un exemple de réalisation de la fonction CALIBR 35.

On débute par une étape d'initialisation 70, au cours de laquelle la fonction CALIBR 35 reçoit certaines au moins des données utiles à la définition des paramètres de l'étalonnage.

Ces paramètres comprennent en particulier une valeur initiale de gain, ou valeur IG, c'est-à-dire une valeur nominale de gain à utiliser en réception lors des futurs contrôles par ultrasons, et une valeur-seuil d'amplitude (relative), ou valeur TG, au-dessus de laquelle on distingue un défaut d'une imperfection. Ces paramètres comprennent en outre une définition des différentes directions à étalonner, c'est-à-dire les directions inspection à utiliser lors les futurs contrôles. Les cas échéant, on remplit un tableau, par exemple du type du tableau de direction DIRECT[ ], et/ou on utilise des données déjà contenu dans un tel tableau.

Les valeurs de gain des données-résultats prennent la valeur nominale IG, commune à tous les couples, quelle que soit la valeur de l'angle. Par exemple, le gain nominal IG peut valoir 11 décibels. Le cas échant, on remplit chaque élément d'un tableau du type du tableau RX_GAIN[ ] avec cette valeur nominale IG.

Les données reçues peuvent en outre comprendre des données de mesures ultrasonores relatives à un tube-échantillon, en particulier des données de mesure relatives à un ou plusieurs réflecteurs directionnels et un réflecteur poly-directionnel. Ces données sont stockées en mémoire sous la forme de jeux de données, par exemple du type des jeux de données UNISET 37 et OMNISET 39. Le cas échéant, on remplit des tableaux du type des tableaux N_AMP[ ] et H_AMP[ ].

L'étape d'initialisation 70 est suivie d'une étape de pré-traitement 72 qui porte sur des données relatives aux réflecteurs directionnels et/ou poly-directionnels, par exemple les données des jeux OMNISET 39 et UNISET 37 décrits en relation avec la figure 6. Le pré-traitement 72 vise à améliorer la qualité, d'un point de vue étalonnage, des données relatives aux réflecteurs.

L'étape de pré-traitement 72 peut comprendre une ou plusieurs étapes de mise en forme de données issues de mesures ultrasonores, de vérification de cohérence de ces données, de normalisation, et plus généralement tout traitement statistique.

Dans un mode de réalisation, l'étape de pré-traitement 72 comprend une sous-étape au cours de laquelle on vérifie la cohérence des données relatives aux réflecteurs directionnels, par exemple les données du jeu UNISET 37, et/ou les données relatives au réflecteur poly-directionnel, par exemple les données du jeu OMNISET 38.

C'est le cas, en particulier, lorsqu'il existe des symétries dans les directions d'inspection qui correspondent aux directions de travail du réflecteur poly-directionnel et/ou à celle des réflecteurs directionnels. Par exemple, lorsque le jeu de données relatif aux réflecteurs directionnels, ou jeu UNISET 37, contient des couples dont les angles correspondent à des directions d'inspection centralement symétriques, on peut vérifier que les valeurs d'amplitude de ces couples sont voisines l'une de l'autre, notamment lorsque les réflecteurs directionnels sont réalisés sous forme d'entailles. Une vérification analogue peut être faite sur les données du jeu relatif au réflecteur poly-directionnel, en particulier lorsque celui-ci est réalisé sous la forme d'un trou de section circulaire, ou plus généralement polygonale.

Sinon, en option, on attribue à ces couples des valeurs d'amplitudes modifiées, calculées statistiquement à partir des valeurs d'origine. Par exemple, on attribue à chacun des couples symétriques une valeur d'amplitude calculée en tant que moyenne des valeurs d'amplitude originales. Un traitement analogue peut être réalisé sur le jeu de données relatif au réflecteur poly-directionnel, par exemple le jeu OMNISET 39.

Les tableaux 2.1 et 2.2 sont analogues aux tableaux 1.1 et 1.2, à l'exception que les valeurs d'amplitudes ont été modifiées pour tenir compte d'effets de symétrie dans les directions d'inspection. Dans le tableau 2.1, par exemple, on prend en compte que les lignes correspondant aux angles 45° et 225° concernent une même entaille, par exemple du type de l'entaille 15 de la figure 3, en attribuant comme valeur d'amplitude à chacune de ces lignes la valeur moyenne des amplitudes des lignes correspondantes dans le tableau 1.1.

L'étape de pré-traitement 72 est suivie d'une étape de traitement statistique 74 des données relatives au réflecteur poly-directionnel et aux réflecteurs directionnels, par exemple les données UNISET 37 et OMNISET 39 respectivement. Les données relatives aux réflecteurs directionnels sont interpolées à l'aide de certaines au moins des données relatives au réflecteur poly-directionnel afin de compléter le jeu de données relatif aux réflecteurs directionnels. On établit ainsi des couples valeur/amplitude représentatifs de réponses de réflecteurs directionnels dirigés selon des orientations différentes. L'interpolation des couples du premier jeu de données et du second jeu de données permettent d'obtenir des couples d'un troisième jeu correspondant à des amplitudes étalons pour des inspections ultrasonores dirigées de manière correspondant à certaines au moins des directions de travail du réflecteur poly-directionnel.

À l'issue du traitement statistique 74, le jeu de données relatif aux réflecteurs directionnels, ou jeu UNISET 37, comprend des couples valeurs/angles correspondant chacun à une amplitude de réponse d'un réflecteur directionnel dont la direction de travail, dans le tube, correspond à la direction d'inspection définie par l'angle.

Finalement, le traitement comprend une étape de comparaison 76, qui porte sur les données résultant du traitement statistique de l'étape 74. Celles-ci sont comparées à des données cibles, en partie au moins définies à l'aide des paramètres d'étalonnage, pour établir un jeu de données utiles à l'étalonnage. Ces données utiles comprennent en particulier une pluralité de couples valeur/angle qui concernent chacun une valeur de gain modifiée pour une direction d'inspection définie par l'angle, ou direction à étalonner.

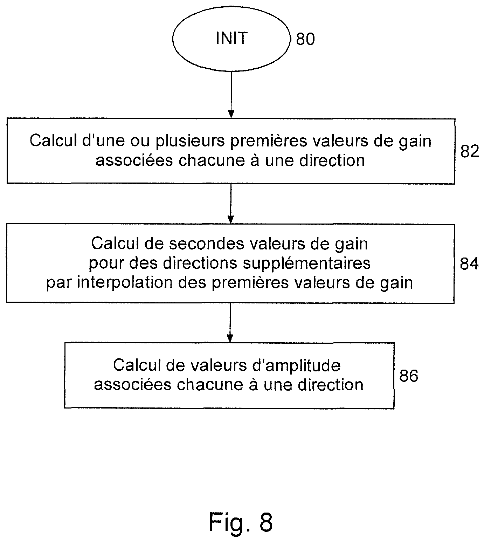

La figure 8 illustre un mode de réalisation d'une fonction de traitement statistique, ou d'interpolation, à usage par exemple pour la mise en œuvre de l'étape 74 décrite en relation avec la figure 7.

L'interpolation débute par une étape d'initialisation 80, suivie d'une étape 82 au cours de laquelle on établit un ou plusieurs couples valeur/angle correspondant chacun à une valeur de gain associée à un paramètre directionnel. Le paramètre directionnel correspond à une direction d'inspection, tandis que la valeur de gain correspond à un rapport des amplitudes de réponse du réflecteur directionnel d'une part, et du réflecteur poly-directionnel, d'autre part, à une inspection dont la direction est définie par l'angle du couple. On utilise par exemple un tableau indexé, qui peut être de dimension N, désigné ici tableau de gain mesurés, ou tableau MES_GAIN[ ].

Les valeurs de gain sont calculées à partir des valeurs d'amplitude des couples du jeu de données relatif aux réflecteurs directionnels, par exemple le jeu UNISET 37, et des valeurs d'amplitude de couples du jeu de données relatif au réflecteur poly-directionnel d'angle correspondant, par exemple le jeu OMNISET, le cas échéant prétraitées. Des valeurs d'angle se correspondent mutuellement si elles désignent des directions identiques ou, à défaut faiblement inclinées l'une par rapport à l'autre. C'est le cas, en particulier, de valeurs d'angle identiques.

Pour chaque couple valeur/angle relatif à un réflecteur directionnel, on établit une valeur de gain à l'aide de la valeur d'amplitude du couple valeur/angle relatif au réflecteur poly-directionnel dont l'angle détermine une direction correspondant la direction de travail du réflecteur directionnel.

Les couples relatifs aux réflecteurs directionnels peuvent être moins nombreux que ceux relatifs au réflecteur poly-directionnel, ce qui permet d'utiliser un faible nombre d'entailles d'orientations différentes les unes des autres. Le gain peut être exprimé en décibel, en rapportant la valeur d'amplitude du réflecteur directionnel à celle du réflecteur poly-directionnel.

Le tableau 3.1 illustre un exemple de contenu du jeu de gains mesurés dans le cas des entailles et orifice décrit plus haut. La colonne de gauche de chaque ligne correspond au rapport, exprimé en décibel, de l'amplitude de la colonne de gauche du tableau 2.1 (entailles) sur l'amplitude de la colonne de gauche du tableau 2.2 (perçage) pour une même valeur d'angle.

Vient ensuite une étape 84 au cours de laquelle on établit des couples valeur/angle supplémentaires correspondant à des valeurs de gain pour des directions d'inspection qui diffèrent des directions de travail des réflecteurs directionnels. Ici, on établit un couple supplémentaire pour chaque direction d'inspection qui correspond à une direction de travail du réflecteur poly-directionnel. On interpole les valeurs de gain des couples valeur/angle établis à l'étape précédente pour des directions de travail des réflecteurs directionnels et poly-directionnels qui se correspondent mutuellement. L'interpolation peut mettre en œuvre une méthode de régression linéaire par exemple. La méthode de régression linéaire fonctionne bien avec le nombre d'entailles décrit ici, c'est-à-dire 4. D'autres méthodes d'interpolation peuvent être utilisées. En particulier des méthodes plus complexes, par exemple d'ordre 2, peuvent être envisagées lorsque le nombre de réflecteurs est inférieur (à 8).

Les résultats de l'interpolations peuvent être stockés dans un tableau, par exemple un tableau SIM_GAIN[ ] indexé et de dimension N, dont l'index correspond aux directions d'inspections dans le tableau DIRECT[ ]. Le tableau 3.2 illustre un exemple de contenu d'un tel tableau. Les valeurs de gain des lignes 0, 45, 90, 135, 180, 225, 280 et 325, qui concernent des directions de travail d'entailles, correspondent aux valeurs de gain des même lignes dans le tableau 3.1. Les valeurs de gain indiquées dans les autres lignes concernent des directions d'inspection à étalonner et résultent d'une interpolation des données obtenues avec les directions de travail des entailles. L'interpolation est ici réalisée par régression linéaire. Par exemple, la valeur de gain de 2,0 décibels obtenue à la ligne 25° pour la colonne de gauche est calculée à partir de la valeur de gain de la ligne 0° du tableau 3.1, à laquelle est ajoutée la différence des gains des lignes 45° et 0° rapportée à la différence angulaire entre ces lignes que multiplie l'écart angulaire entre la ligne 25° et la ligne 0°.

Au cours d'une étape 86, on utilise les valeurs de gain des couples des étapes 82 et 84 conjointement aux valeurs d'amplitude des couples relatifs au réflecteur poly-directionnel pour établir un ensemble de couples valeur/angle correspondant à des valeurs d'amplitude associées chacune à un paramètre directionnel. On applique à la valeur d'amplitude de chaque couple valeur/angle du jeu de données relatif au réflecteur directionnel la valeur de gain dont l'angle correspond. Le résultat est mémorisé sous la forme d'un nouveau couple valeur/angle qui peut être vu comme une valeur d'amplitude de réponse d'un réflecteur directionnel virtuel associée à l'orientation de ce réflecteur en tant que paramètre directionnel. L'ensemble des couples obtenus peut être mémorisé en tant que nouveau jeu de données, comprenant par exemple un tableau SIM_AMP[ ] indexé et de dimension N, ou venir compléter le jeu de données relatif aux réflecteurs directionnels, par exemple un tableau du type du tableau N_AMP[ ].

Le tableau 3.3 illustre le résultat de l'étape 86, tel qu'il peut être contenu dans le tableau SIM_AMP[ ] par exemple. Dans chaque ligne, la valeur d'amplitude est calculée à partir de l'amplitude de la ligne correspondante pour l'orifice dans le tableau 2.2 et du gain simulé de la ligne correspondante dans le tableau 3.2. Par exemple, la valeur 64,3% de la ligne 25° est obtenue à partir de la valeur d'amplitude correspondante du tableau 2.2 que multiplie la valeur 10 élevée à une puissance du gain divisé par 20.

Le gain à régler pour chaque direction d'inspection peut alors être calculé en corrigeant la valeur initiale du gain, par exemple le gain IG, par le rapport, en décibels, de la valeur d'amplitude résultant de l'interpolation sur la valeur d'amplitude cible, par exemple la valeur TS. Le tableau 4.1 illustre un exemple de valeurs de gain ainsi obtenues pour des valeurs de IG à 11 décibels et de TG à 80%. Le tableau 4.2 illustre le fait que les valeurs de gain de réglage obtenues pour l'extérieur du tube échantillon peuvent s'exprimer relativement aux valeurs de gain obtenues pour l'intérieur du tube.

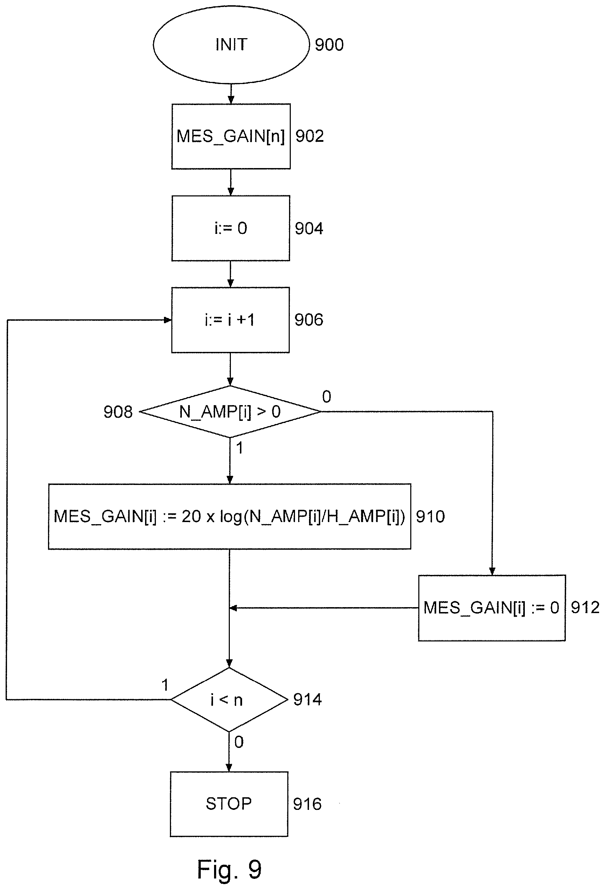

La figure 9 illustre un mode de réalisation d'une fonction comparative capable d'établir un ensemble de valeurs de gain à partir de couples relatifs à des réflecteurs directionnels et poly-directionnel respectivement, tels que stockés dans les tableaux H_AMP[ ] et N_AMP[ ] décrits plus haut.

À l'étape 900, la fonction s'initialise. À l'étape 902, on définit un tableau indexé de données de dimension N, ou tableau de gain MES_GAIN[ ]. À l'étape 904, on débute une structure de boucle en initialisant le compteur de boucle, ici la variable muette i. À l'étape 906, on incrémente le compteur de boucle. À l'étape 908, on vérifie s'il existe une valeur d'amplitude dans la colonne i du tableau N_AMP[ ] en vérifiant si la valeur N_AMP[i] stockée dans la colonne i est supérieure à zéro.

Si oui, alors on calcule une valeur de gain en tant que rapport pour la valeur d'index i des valeurs stockées dans le tableau N_AMP[ ] sur la valeur stockée dans le tableau H_AMP[ ] (étape 910). Le gain est calculé en décibel. La valeur calculée est stockée dans la colonne i du tableau de gain MES_GAIN[ ].

Sinon, on attribue la valeur nulle à l'élément i du tableau de gain MES_GAIN[ ] au cours de l'étape 912. À la fin des étapes 910 et 912, on vérifie si le compteur de boucle i a atteint la valeur N indicatrice de fin de boucle (étape 914). Si oui, la fonction s'arrête en 916. Sinon, on retourne à l'étape 906.

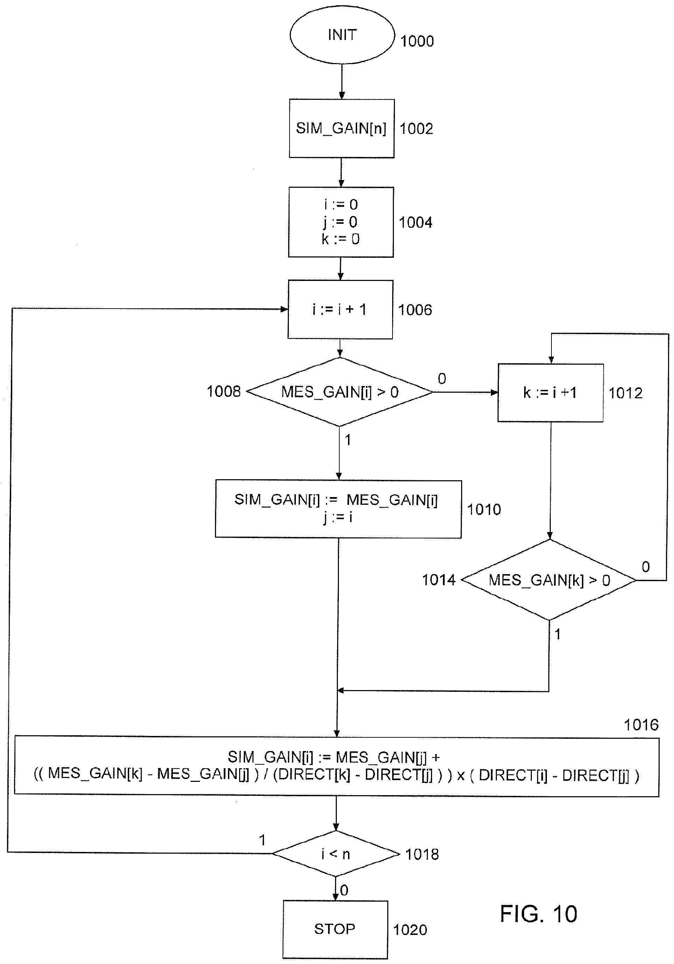

La figure 10 illustre un mode de réalisation d'une fonction d'interpolation capable de calculer des couples valeur/angles correspondant à des valeurs de gain par interpolation de couples valeur/angles correspondant à des valeurs de gain associées chacune à un paramètres directionnel, tels que stockés dans le tableau MES_GAIN[ ].

Elle débute par une étape d'initialisation 1000. Au cours d'une étape 1002, on déclare un nouveau tableau indexé SIM_GAIN[ ] de dimension N pour recevoir des données de calcul.

À l'étape suivante, étape 1004, on initialise trois variables muettes i, j et k. On incrémente la variable i en tant que compteur de boucle, à l'étape 1006.

Au cours de l'étape 1008, on vérifie si l'élément i du premier tableau de gains MES_GAIN[ ] contient une valeur.

Si oui, alors, à l'étape 1010, on mémorise la valeur MES_GAIN[i] à la colonne i du second tableau SIM_GAIN[ ], et l'on attribue à la variable j la valeur de la variable i.

Sinon, à l'étape 1012, on attribue à la variable k une valeur incrémentée du premier compteur de boucle i. Et, lors d'une étape 1014, on vérifie si le premier tableau de gain MES_GAIN[ ] contient une valeur non nulle en sa colonne désignée par la valeur de la variable k. Sinon on retourne à l'étape 1012.

À l'issue des étapes 1010 et 1014, on établit (étape 1016) une nouvelle valeur de gain que l'on stocke dans la colonne i du second tableau de gain SIM_GAIN[ ] à partir de la formule suivante (A) :

$$A : SIM\_GAIN[i] := MES\_GAIN[j] +$$

$$((MES\_GAIN[k] - MES\_GAIN[j])/(DIRECT[k] - DIRECT[j])) \text{ x } (DIRECT[i] - DIRECT[j])$$

On teste ensuite, lors de l'étape 1018, si le compteur de boucle i a atteint sa valeur finale n. Si oui, on s'arrête à une étape 1020. Sinon on retourne à l'étape 1006.

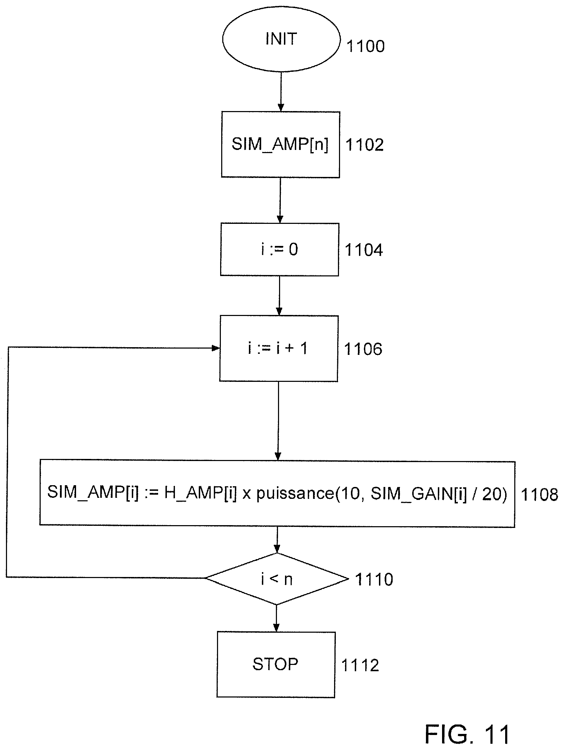

La figure 11 illustre un mode de réalisation d'une fonction de simulation capable de calculer des couples valeur/angle correspondant à des valeurs d'amplitude à partir de couples valeur/angle correspondant à des valeurs gain associées chacune à un paramètre directionnel, tel que stockées dans le tableau SIM_GAIN[ ], par exemple.

Elle débute par une étape d'initialisation 1100. Au cours d'une étape 1102, on déclare un nouveau tableau indexé SIM_AMP[ ], par exemple de dimensions N, destiné à recevoir des données de calcul.

À l'étape suivante 1104, on initialise une variable muette i en tant que compteur de boucle. On incrémente le compteur i, à l'étape 1106. Au cours de l'étape 1108, on attribue au i$^e$ élément du tableau SIM_AMP[ ] une valeur calculée sur la base de la formule suivante (B) :

$$B : \quad SIM\_AMP[i] := H\_AMP[i] \text{ x } puissance(10, SIM\_GAIN[i] / 20)$$

À l'étape 1110, on vérifie si la valeur du compteur de boucle i est inférieure à la valeur N.

Si oui, alors on retourne à l'étape 1106. Sinon, la fonction s'arrête à l'étape 1112.

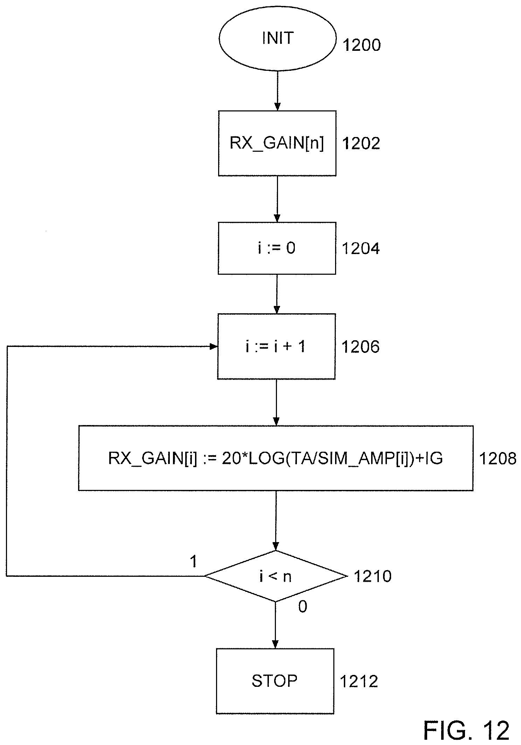

La figure 12 illustre un mode de réalisation d'une fonction de conversion capable de calculer des couples valeur/angle correspondant à des valeurs de gain associées chacune à un paramètre directionnel à partir de valeurs d'amplitudes telles que stockées dans le tableau SIM_AMP[ ].

La fonction débute par une étape d'initialisation 1200.

Au cours d'une étape 1202, on crée un tableau indexé RX_GAIN[ ] de dimension N destiné à recevoir les données de calcul.

À l'étape suivante, étape 1204, on initialise une variable muette i en tant que compteur de boucle.

À l'étape 1206, on incrémente le compteur de boucle i puis, à l'étape 1208, on associe en tant que i-ème élément du tableau RX_GAIN[ ] la valeur calculée à partir de la formule suivante (C) :

$$C : \quad RX\_GAIN[i] := 20 \text{ x } LOG(TA/SIM\_AMP[i]) + IG$$

À l'étape suivante, étape 1210, on teste si le compteur de boucle est strictement inférieur à la valeur de fin de boucle N. Si oui, alors on retourne à l'étape 1206. Sinon, la fonction s'arrête dans une étape 1212.

La fonction CALIBR 35 travaille sur le premier jeu de données, relatif à un ou plusieurs réflecteurs directionnels ménagé dans le tube-échantillon, et sur le second jeu de données relatif à un réflecteur poly-directionnel ménagé dans ce tube.

L'obtention des données relatives à ces réflecteurs peut se faire classiquement. Par exemple, à chaque mesure, on réalise un tir ultrasonore par direction de travail d'un réflecteur directionnel, et de façon correspondant à cette direction. Et, à chaque mesure, on réalise autant de tirs que de directions d'inspections ou que de directions de travail du réflecteur poly-directionnel. L'usage d'un traducteur ultrasonore de type multiéléments facilite les mesures : les lois de retard permettent d'orienter le faisceau ultrasonore sans modifier la position relative du traducteur par rapport au tube-échantillon.

Pour accélérer les mesures, on peut utiliser un dispositif du type décrit dans la demande de brevet français FR 3 000 212 au nom de la Demanderesse. Un seul tir permet alors d'obtenir des données d'amplitudes selon plusieurs directions différentes les unes des autres.

En pratique, on utilise de préférence pour l'étalonnage une configuration d'inspection analogue à celle utilisée en production. Ceci améliore grandement les inspections réalisées en production.

On peut également utiliser un dispositif du type connu sous le nom d'électronique FAAST II (par exemple montré à l'adresse http://www.socomate.com/2-products/phased-array/faast-ii-2d-matrix-active-8x40e-2mhz-21.htm) de la société SOCOMATE, ou un dispositif du type connu sous le nom d'installation GRP (par exemple montré à l'adresse http://www.ge-mcs.com/en/ultrasound/integrated-systems/tubepipe-grp.html) de la société GENERAL ELECTRIC.

La qualité des données d'étalonnage établies par la fonction CALIBR 35 est influencée par la qualité des données d'origine, à partir desquelles on constitue les premier et second jeux de données. Les données d'origine proviennent de mesures ultrasonores, effectuées sur le tube-échantillon.

Les réflecteurs directionnels, par exemple les entailles 7 décrites en relation avec les figures 3 à 5, présentent généralement une dimension plus importante que les autres, laquelle correspond à la direction de travail du réflecteur. Cette propriété peut être utilisée pour obtenir plusieurs valeurs d'amplitude de réflexion d'un réflecteur particulier pour une même direction d'inspection.

Généralement, on réalise plusieurs mesures pour chaque réflecteur, au moins pour les réflecteurs directionnels. Entre deux mesures, le tube échantillon et le traducteur ultrasonore sont déplacés l'un par rapport à l'autre, par exemple d'un millimètre. C'est pourquoi la longueur de l'entaille fait généralement l'objet d'une spécification minimale : elle permet d'assurer, étant donné un nombre de tirs par unité d'avance du tube, la détection d'une entaille d'une longueur minimale avec un nombre de points paramétrable.

Étant mesuré, pour un réflecteur directionnel, un ensemble de couples valeur/angle désignant des valeurs d'amplitudes différentes pour une même valeur d'angle, correspondant à une direction d'inspection, il convient d'établir une valeur d'amplitude représentative, à usage dans le jeu de données relatif à ce réflecteur directionnel. Prendre la valeur maximale d'amplitude en tant que valeur représentative n'est pas satisfaisant : cela revient à ne qualifier de défaut que des imperfections de taille importante. Et prendre la valeur moyenne d'amplitude ne l'est pas non plus : on risque de ne pas détecter les réflecteurs s'ils sont très dispersés.

Selon une variante de réalisation, la fonction CALIBR 35 est capable d'extraire d'un tel ensemble de valeurs d'amplitude une valeur d'amplitude caractéristique du réflecteur directionnel. Cette valeur caractéristique est établie en tant que valeur-seuil qui permet d'obtenir un nombre prédéterminé de valeurs successives d'amplitude supérieure à cette valeur-seuil. Le nombre en question correspond à une résolution. Il est paramétrable. Les mesures des tableaux de l'annexe 1 par exemple correspondent à une résolution de 3 points successifs.

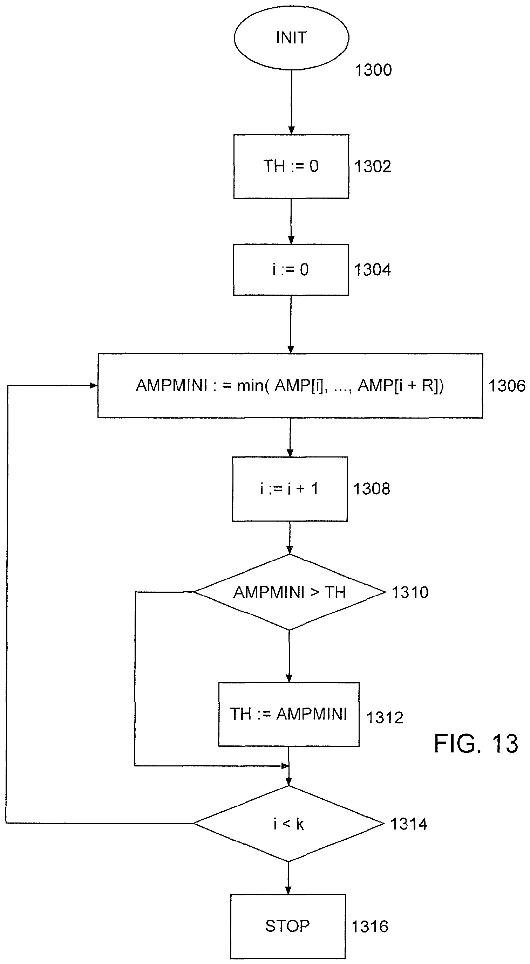

La figure 13 illustre un mode de réalisation d'une fonction d'extraction à usage pour obtenir une valeur d'amplitude caractéristique d'un réflecteur directionnel à partir d'un ensemble de valeurs d'amplitudes associées à une même direction d'inspection.

Elle débute par une étape d'initialisation 1300, au cours de laquelle elle reçoit en tant que paramètre une valeur entière R en tant que valeur de résolution. On reçoit également un ensemble de valeurs d'amplitudes, par exemple sous la forme d'un tableau indexé de dimension k, ou tableau AMP[k]. Ces valeurs d'amplitudes concernent un même réflecteur directionnel et une même direction d'inspection.

Au cours d'une étape 1302, on définit une variable TH que l'on initialise à la valeur nulle. Puis l'on débute une structure de boucle à l'aide d'une variable muette i en tant que compteur. Le compteur est initialisé (étape 1304). Au cours de l'étape suivante 1306, on détermine la valeur minimale AMPMINI parmi les valeurs d'amplitude mémorisées dans le tableau AMP[k] à l'élément i, à l'élément i + R et dans tous les éléments compris entre ces derniers.

À l'étape 1308, le compteur de boucle est incrémenté. En l'étape 1310, on vérifie si la valeur minimale d'amplitude AMPMINI est supérieure à la valeur TH. Si oui, alors, à l'étape 1312, la valeur seuil TH prend la valeur de l'amplitude minimale AMPMINI. Sinon, comme à l'issue de l'étape 1312, on vérifie si le compteur de boucle a atteint sa valeur de fin k (étape 1314). Si oui, alors la fonction s'arrête en 1316. Sinon, on retourne en 1306. La valeur TH finale correspond à une valeur-seuil qui caractérise le réflecteur directionnel.

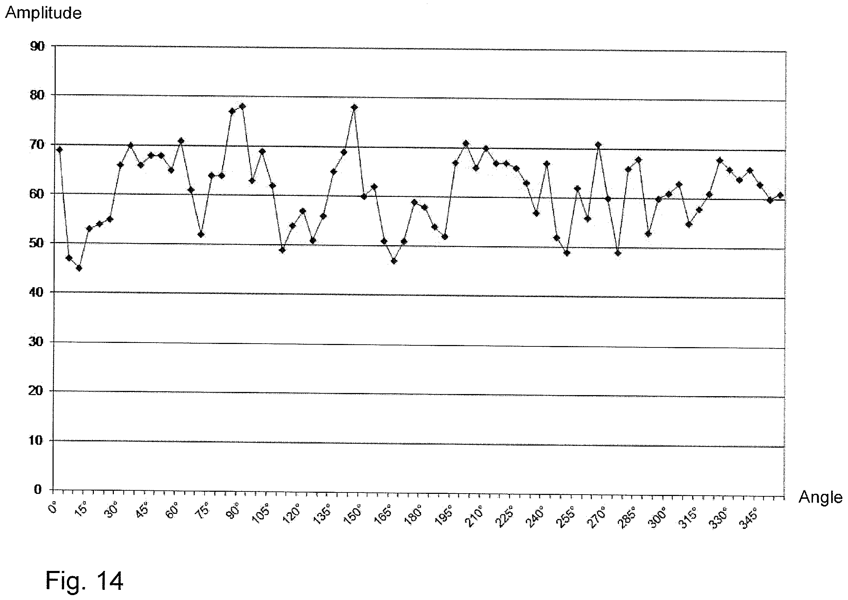

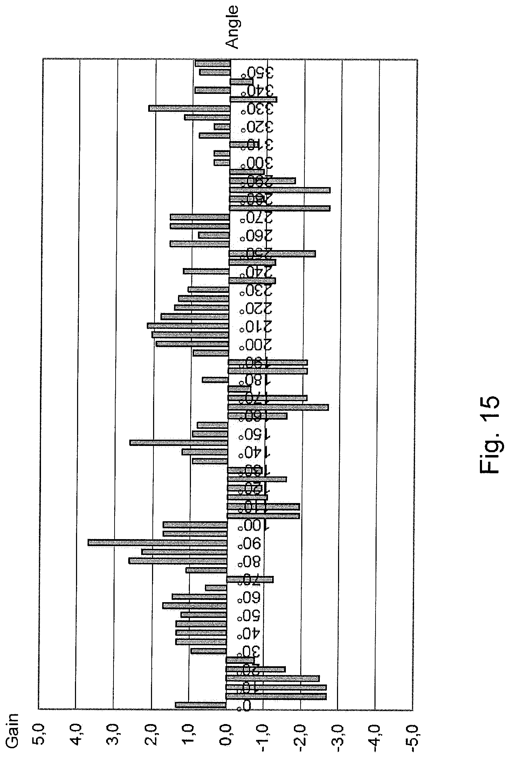

On fait maintenant référence aux figures 14 et 15 qui illustrent la performance du dispositif d'aide à la calibration dans le cas d'un tube échantillon de 88,9 millimètres de diamètre et de 7,61 millimètre d'épaisseur.

Le graphique de la figure 14 montre des valeurs d'amplitudes obtenues pour des entailles extérieures (réelles) orientées autour de 360° avec un pas de 5° dans le cas d'un étalonnage réalisé avec le dispositif d'aide décrit, paramétré avec une valeur d'amplitude seuil à 60%. Le contrôle a été réalisé 10 fois, et on a considéré la valeur d'amplitude la plus défavorable, c'est-à-dire la valeur expérimentale la plus éloignée de la valeur d'amplitude cible.

Le graphique de la figure 15 est analogue à la figure 14 excepté qu'il montre l'écart entre les valeurs mesurées et les valeurs étalonnées en décibels. La figure 15 fait apparaître une valeur de dispersion de 6,4 décibels environ. Cette valeur est compatible avec les impératifs industriels.

Le tableau suivant indique des valeurs de dispersion obtenues dans des conditions similaires, pour des tubes de taille différente, le cas échéant avec des entailles externes et/ou internes. Les valeurs indiquées confirment que le dispositif d'étalonnage décrit est suffisamment précis pour être utilisé de manière industrielle.

| Tube-échantillon (diamètre x épaisseur) | Entailles internes (en décibels) | Entailles externes (en décibels) |
|---|---|---|
| 88.9 x 7.61 mm | 4,4 | 6,4 |
| 339,7 x 16 mm | 6,5 | 6,9 |
| 231 x 10 mm | *Néant* | 7,8 |

On vient de décrire un dispositif, ou module, d'aide à l'étalonnage d'un dispositif de contrôle d'un produit métallurgique, en particulier un tube. Le module utilise des données mesurées pour des inspections ultrasonores réalisées sur un réflecteur poly-directionnel, notamment un perçage, et sur un ou plusieurs réflecteur directionnels, par exemple de type entailles. Les directions d'inspections utilisées pour les mesures correspondent de préférence aux directions d'inspection à usage en production : ceci améliore grandement l'étalonnage. Chaque entaille est dirigée selon une direction d'inspection respective. Pour autant, on utilise moins de réflecteurs directionnels qu'il existe de directions d'inspection à étalonner : les directions d'inspection qui ne correspondent à aucune direction de travail d'un réflecteur directionnel sont étalonnées à l'aide des amplitudes mesurées avec le réflecteur poly-directionnel, pour une direction de travail correspondante. Les amplitudes mesurées sur le réflecteur poly-directionnel sont corrigées sur la base d'une comparaison des valeurs d'amplitude obtenues, pour une même direction d'inspection, sur les réflecteurs directionnels et le réflecteur poly-directionnel. Ceci permet de continuer d'utiliser les réflecteurs directionnels, en particulier les entailles, comme défauts-étalons, dont les caractéristiques géométriques peuvent, le cas échéant, faire l'objet d'une spécification, tout en diminuant leur nombre.

Vu autrement, ceci permet d'utiliser un ou plusieurs défauts-étalons quelle que soit leur orientation dans le tube pour étalonner une pluralité de directions d'inspection. En outre, seuls les réflecteurs directionnels ont besoin d'être dimensionnés pour les besoins de l'étalonnage.

L'invention a essentiellement été présentée sous forme de dispositif. Elle peut aussi être vue comme un procédé d'aide à l'étalonnage d'un dispositif de contrôle de produits métallurgiques selon la revendication 12. Selon ce procédé, on stocke un premier jeu de données sous la forme de couples valeur/angle, le premier jeu de données concernant un réflecteur poly-directionnel ménagé dans le produit métallurgique, les couples valeur/angle du premier jeu de données correspondant à des amplitudes de retour mesurées résultant de tirs ultrasonores dirigés, dans le produit métallurgique, selon certaines au moins de directions de travail du réflecteur poly-directionnel correspondant audit angle. On stocke également un second jeu de données sous la forme de couples valeur/angle, le second jeu de données concernant un réflecteur directionnel ménagé dans le produit métallurgique, le second jeu de données comprenant, pour le réflecteur directionnel, un couple valeur/angle correspondant à une amplitude de retour mesurée résultant d'un tir ultrasonore dirigé selon une direction de travail du réflecteur correspondant audit angle. On établit un troisième jeu de données, sous la forme de couples valeur/angle, par interpolation des couples du premier jeu de données et du second jeu de données, les couples du troisième jeu correspondant à des amplitudes étalon pour des tirs ultrasonores dirigés de manière correspondante à certaines au moins des directions de travail du réflecteur poly-directionnel.

L'invention peut aussi être exprimée sous la forme d'un produit de programme informatique selon la revendication 13. L'invention n'est pas limitée aux modes de réalisation décrit ci-dessus, à titre d'exemple unique, mais englobe toutes les variantes que pourra envisager l'homme de l'art dans l'étendue des revendications annexées.

Annexe 1 : données originales

Tableau 1.1 : réponses des entailles

| Direction | Interne | Externe |
|---|---|---|
| 0 | 85,0 | 70,0 |
| 45 | 71,0 | 50,0 |

(suite)

| Direction | Interne | Externe |
|-----------|---------|---------|
| 90 | 95,0 | 32,0 |
| 135 | 81,0 | 52,0 |
| 180 | 81,0 | 63,0 |
| 225 | 76,0 | 52,0 |
| 270 | 86,0 | 40,0 |
| 315 | 85,0 | 58,0 |

Tableau 1.2 : réponses de l'orifice (en amplitude)

| Direction | Interne | Externe | Direction | Interne | Externe |
|-----------|---------|---------|-----------|---------|---------|
| 0 | 93,0 | 52,0 | 180 | 50,0 | 41,0 |
| 5 | 90,0 | 53,0 | 185 | 48,0 | 39,0 |
| 10 | 80,0 | 48,0 | 190 | 41,0 | 34,0 |
| 15 | 65,0 | 38,0 | 195 | 32,0 | 26,0 |
| 20 | 55,0 | 32,0 | 200 | 33,0 | 31,0 |
| 25 | 64,0 | 37,0 | 205 | 38,0 | 36,0 |
| 30 | 68,0 | 39,0 | 210 | 40,0 | 35,0 |
| 35 | 67,0 | 37,0 | 215 | 37,0 | 31,0 |
| 40 | 65,0 | 38,0 | 220 | 37,0 | 34,0 |
| 45 | 66,0 | 39,0 | 225 | 43,0 | 35,0 |
| 50 | 69,0 | 41,0 | 230 | 50,0 | 34,0 |
| 55 | 68,0 | 38,0 | 235 | 52,0 | 34,0 |
| 60 | 64,0 | 36,0 | 240 | 52,0 | 33,0 |
| 65 | 58,0 | 35,0 | 245 | 47,0 | 31,0 |
| 70 | 52,0 | 34,0 | 250 | 44,0 | 26,0 |
| 75 | 61,0 | 35,0 | 255 | 53,0 | 28,0 |
| 80 | 71,0 | 34,0 | 260 | 63,0 | 32,0 |
| 85 | 78,0 | 39,0 | 265 | 69,0 | 37,0 |
| 90 | 79,0 | 42,0 | 270 | 74,0 | 40,0 |
| 95 | 76,0 | 41,0 | 275 | 76,0 | 39,0 |
| 100 | 71,0 | 36,0 | 280 | 72,0 | 36,0 |
| 105 | 62,0 | 30,0 | 285 | 65,0 | 36,0 |
| 110 | 52,0 | 29,0 | 290 | 57,0 | 35,0 |
| 115 | 55,0 | 33,0 | 295 | 61,0 | 36,0 |
| 120 | 61,0 | 37,0 | 300 | 68,0 | 43,0 |
| 125 | 63,0 | 39,0 | 305 | 74,0 | 47,0 |
| 130 | 61,0 | 39,0 | 310 | 75,0 | 46,0 |
| 135 | 55,0 | 36,0 | 315 | 71,0 | 43,0 |
| 140 | 47,0 | 33,0 | 320 | 66,0 | 39,0 |
| 145 | 46,0 | 29,0 | 325 | 67,0 | 38,0 |
| 150 | 45,0 | 31,0 | 330 | 68,0 | 40,0 |
| 155 | 43,0 | 34,0 | 335 | 65,0 | 41,0 |
| 160 | 35,0 | 30,0 | 340 | 59,0 | 38,0 |
| 165 | 34,0 | 29,0 | 345 | 55,0 | 32,0 |
| 170 | 43,0 | 35,0 | 350 | 71,0 | 40,0 |
| 175 | 49,0 | 39,0 | 355 | 86,0 | 48,0 |

Annexe 2 : données résultant d'un prétraitement

Tableau 2.1 : réponses des entailles (en amplitude)

| Direction | Interne | Externe |
|---|---|---|
| 0 | 83,0 | 66,5 |
| 45 | 73,5 | 51,0 |
| 90 | 90,5 | 36,0 |
| 135 | 83,0 | 55,0 |
| 180 | 83,0 | 66,5 |
| 225 | 73,5 | 51,0 |
| 270 | 90,5 | 36,0 |
| 315 | 83,0 | 55,0 |

Tableau 2.2 : réponses de l'orifice (en amplitude)

| Direction | Interne | Externe | Direction | Interne | Externe |
|---|---|---|---|---|---|
| 0 | 71,5 | 46,5 | 180 | 71,5 | 46,5 |
| 5 | 69,0 | 46,0 | 185 | 69,0 | 46,0 |
| 10 | 60,5 | 41,0 | 190 | 60,5 | 41,0 |
| 15 | 48,5 | 32,0 | 195 | 48,5 | 32,0 |
| 20 | 44,0 | 31,5 | 200 | 44,0 | 31,5 |
| 25 | 51,0 | 36,5 | 205 | 51,0 | 36,5 |
| 30 | 54,0 | 37,0 | 210 | 54,0 | 37,0 |
| 35 | 52,0 | 34,0 | 215 | 52,0 | 34,0 |
| 40 | 51,0 | 36,0 | 220 | 51,0 | 36,0 |
| 45 | 54,5 | 37,0 | 225 | 54,5 | 37,0 |
| 50 | 59,5 | 37,5 | 230 | 59,5 | 37,5 |
| 55 | 60,0 | 36,0 | 235 | 60,0 | 36,0 |
| 60 | 58,0 | 34,5 | 240 | 58,0 | 34,5 |
| 65 | 52,5 | 33,0 | 245 | 52,5 | 33,0 |
| 70 | 48,0 | 30,0 | 250 | 48,0 | 30,0 |
| 75 | 57,0 | 31,5 | 255 | 57,0 | 31,5 |
| 80 | 67,0 | 33,0 | 260 | 67,0 | 33,0 |
| 85 | 73,5 | 38,0 | 265 | 73,5 | 38,0 |
| 90 | 76,5 | 41,0 | 270 | 76,5 | 41,0 |
| 95 | 76,0 | 40,0 | 275 | 76,0 | 40,0 |
| 100 | 71,5 | 36,0 | 280 | 71,5 | 36,0 |
| 105 | 63,5 | 33,0 | 285 | 63,5 | 33,0 |
| 110 | 54,5 | 32,0 | 290 | 54,5 | 32,0 |
| 115 | 58,0 | 34,5 | 295 | 58,0 | 34,5 |
| 120 | 64,5 | 40,0 | 300 | 64,5 | 40,0 |
| 125 | 68,5 | 43,0 | 305 | 68,5 | 43,0 |
| 130 | 68,0 | 42,5 | 310 | 68,0 | 42,5 |
| 135 | 63,0 | 39,5 | 315 | 63,0 | 39,5 |
| 140 | 56,5 | 36,0 | 320 | 56,5 | 36,0 |
| 145 | 56,5 | 33,5 | 325 | 56,5 | 33,5 |
| 150 | 56,5 | 35,5 | 330 | 56,5 | 35,5 |
| 155 | 54,0 | 37,5 | 335 | 54,0 | 37,5 |
| 160 | 47,0 | 34,0 | 340 | 47,0 | 34,0 |
| 165 | 44,5 | 30,5 | 345 | 44,5 | 30,5 |
| 170 | 57,0 | 37,5 | 350 | 57,0 | 37,5 |
| 175 | 67,5 | 43,5 | 355 | 67,5 | 43,5 |

Annexe 3 : rapport des réponses orifice /entailles

Tableau 3.1 : rapports des réponses mesurées (en gain)

| Direction | Interne | Externe |
|-----------|---------|---------|
| 0 | 1,30 | 3,11 |
| 45 | 2,60 | 2,79 |
| 90 | 1,46 | -1,13 |
| 135 | 2,39 | 2,88 |
| 180 | 1,30 | 3,11 |
| 228 | 2,60 | 2,79 |
| 270 | 1,46 | -1,13 |
| 315 | 2,39 | 2,88 |

Tableau 3.2 : interpolation des réponses (en gain)

| Direction | Interne | Externe | Direction | Interne | Externe |
|-----------|---------|---------|-----------|---------|---------|
| 0 | 1,3 | 3,1 | 180 | 1,3 | 3,1 |
| 5 | 1,4 | 3,1 | 185 | 1,4 | 3,1 |
| 10 | 1,6 | 3,0 | 190 | 1,6 | 3,0 |
| 15 | 1,7 | 3,0 | 195 | 1,7 | 3,0 |
| 20 | 1,9 | 3,0 | 200 | 1,9 | 3,0 |
| 25 | 2,0 | 2,9 | 205 | 2,0 | 2,9 |
| 30 | 2,2 | 2,9 | 210 | 2,2 | 2,9 |
| 35 | 2,3 | 2,9 | 215 | 2,3 | 2,9 |
| 40 | 2,5 | 2,8 | 220 | 2,5 | 2,8 |
| 45 | 2,6 | 2,8 | 225 | 2,6 | 2,8 |
| 50 | 2,5 | 2,4 | 230 | 2,7 | 2,8 |
| 55 | 2,3 | 1,9 | 235 | 2,9 | 2,7 |
| 60 | 2,2 | 1,5 | 240 | 2,3 | 2,7 |
| 65 | 2,1 | 1,0 | 245 | 2,2 | 2,6 |
| 70 | 2,0 | 0,6 | 250 | 2,0 | 2,6 |
| 75 | 1,8 | 0,2 | 255 | 1,9 | 2,6 |
| 80 | 1,7 | -0,3 | 260 | 1,8 | 2,5 |
| 85 | 1,6 | -0,7 | 265 | 1,7 | 2,5 |
| 90 | 1,5 | -1,1 | 270 | 1,5 | 2,5 |
| 95 | 1,6 | -0,7 | 275 | 1,6 | -0,7 |
| 100 | 1,7 | -0,2 | 280 | 1,7 | -0,2 |
| 105 | 1,8 | 0,2 | 285 | 1,8 | 0,2 |
| 110 | 1,9 | 0,7 | 290 | 1,9 | 0,7 |
| 115 | 2,0 | 1,1 | 295 | 2,0 | 1,1 |
| 120 | 2,1 | 1,5 | 300 | 2,1 | 1,5 |
| 125 | 2,2 | 2,0 | 305 | 2,2 | 2,0 |
| 130 | 2,3 | 2,4 | 310 | 2,3 | 2,4 |
| 135 | 2,4 | 2,9 | 315 | 2,4 | 2,9 |
| 140 | 2,3 | 2,9 | 320 | 2,3 | 2,9 |
| 145 | 2,2 | 2,9 | 325 | 2,2 | 2,9 |
| 150 | 2,0 | 3,0 | 330 | 2,0 | 3,0 |
| 155 | 1,9 | 3,0 | 335 | 1,9 | 3,0 |
| 160 | 1,8 | 3,0 | 340 | 1,8 | 3,0 |
| 165 | 1,7 | 3,0 | 345 | 1,7 | 3,0 |
| 170 | 1,5 | 3,1 | 350 | 1,5 | 3,1 |
| 175 | 1,4 | 3,1 | 355 | 1,4 | 3,1 |

Tableau 3.3 : interpolation des réponses (en amplitude)

| Direction | Interne | Externe | Direction | Interne | Externe |
|-----------|---------|---------|-----------|---------|---------|
| 0 | 83,0 | 66,5 | 180 | 83,0 | 66,5 |
| 5 | 81,4 | 65,5 | 185 | 81,4 | 65,5 |
| 10 | 72,6 | 58,2 | 190 | 72,6 | 58,2 |
| 15 | 59,2 | 45,2 | 195 | 59,2 | 45,2 |
| 20 | 54,6 | 44,3 | 200 | 54,6 | 44,3 |
| 25 | 64,3 | 51,1 | 205 | 64,3 | 51,1 |
| 30 | 69,3 | 51,6 | 210 | 69,3 | 51,6 |
| 35 | 67,8 | 47,3 | 215 | 67,8 | 47,3 |
| 40 | 67,6 | 49,8 | 220 | 67,6 | 49,8 |
| 45 | 73,5 | 51,0 | 225 | 73,5 | 51,0 |
| 50 | 79,1 | 49,2 | 230 | 81,6 | 51,5 |
| 55 | 78,6 | 44,9 | 235 | 83,7 | 49,2 |
| 60 | 74,9 | 40,9 | 240 | 75,5 | 47,0 |
| 65 | 66,8 | 37,2 | 245 | 67,4 | 44,7 |
| 70 | 60,2 | 32,2 | 250 | 60,7 | 40,5 |
| 75 | 70,4 | 32,1 | 255 | 71,1 | 42,4 |
| 80 | 81,6 | 32,0 | 260 | 82,3 | 44,2 |
| 85 | 88,2 | 35,1 | 265 | 89,0 | 50,7 |
| 90 | 90,5 | 36,0 | 270 | 91,3 | 54,5 |
| 95 | 91,0 | 37,0 | 275 | 91,0 | 37,0 |
| 100 | 86,6 | 35,0 | 280 | 86,6 | 35,0 |
| 105 | 77,9 | 33,8 | 285 | 77,9 | 33,8 |
| 110 | 67,6 | 34,5 | 290 | 67,6 | 34,5 |
| 115 | 72,8 | 39,1 | 295 | 72,8 | 39,1 |
| 120 | 82,0 | 47,8 | 300 | 82,0 | 47,8 |
| 125 | 88,1 | 54,0 | 305 | 88,1 | 54,0 |
| 130 | 88,5 | 56,2 | 310 | 88,5 | 56,2 |
| 135 | 83,0 | 55,0 | 315 | 83,0 | 55,0 |
| 140 | 73,4 | 50,3 | 320 | 73,4 | 50,3 |
| 145 | 72,4 | 46,9 | 325 | 72,4 | 46,9 |
| 150 | 71,4 | 49,9 | 330 | 71,4 | 49,9 |
| 155 | 67,3 | 52,8 | 335 | 67,3 | 52,8 |
| 160 | 57,7 | 48,0 | 340 | 57,7 | 48,0 |
| 165 | 53,9 | 43,2 | 345 | 53,9 | 43,2 |
| 170 | 68,1 | 53,3 | 350 | 68,1 | 53,3 |
| 175 | 79,5 | 62,0 | 355 | 79,5 | 62,0 |

Annexe 4 : valeurs de gain à régler

Tableau 4.1 : valeurs absolues

| Direction | Interne | Externe | Direction | Interne | Externe |
|---|---|---|---|---|---|
| 0 | 34,7 | 36,6 | 180 | 34,7 | 36,6 |
| 5 | 34,8 | 36,7 | 185 | 34,8 | 36,7 |
| 10 | 35,8 | 37,8 | 190 | 35,8 | 37,8 |
| 15 | 37,6 | 40,0 | 195 | 37,6 | 40,0 |
| 20 | 38,3 | 40,1 | 200 | 38,3 | 40,1 |
| 25 | 36,9 | 38,9 | 205 | 36,9 | 38,9 |
| 30 | 36,3 | 38,8 | 210 | 36,3 | 38,8 |
| 35 | 36,4 | 39,6 | 215 | 36,4 | 39,6 |
| 40 | 36,5 | 39,1 | 220 | 36,5 | 39,1 |
| 45 | 35,7 | 38,9 | 225 | 35,7 | 38,9 |
| 50 | 35,1 | 39,2 | 230 | 34,8 | 38,8 |
| 55 | 35,2 | 40,0 | 235 | 34,6 | 39,2 |
| 60 | 35,6 | 40,8 | 240 | 35,5 | 39,6 |
| 65 | 36,6 | 41,6 | 245 | 36,5 | 40,0 |
| 70 | 37,5 | 42,9 | 250 | 37,4 | 40,9 |
| 75 | 36,1 | 42,9 | 255 | 36,0 | 40,5 |
| 80 | 34,8 | 43,0 | 260 | 34,8 | 40,2 |
| 85 | 34,1 | 42,2 | 265 | 34,1 | 39,0 |
| 90 | 33,9 | 41,9 | 270 | 33,9 | 38,3 |
| 95 | 33,9 | 41,7 | 275 | 33,9 | 41,7 |
| 100 | 34,3 | 42,2 | 280 | 34,3 | 42,2 |
| 105 | 35,2 | 42,5 | 285 | 35,2 | 42,5 |
| 110 | 36,5 | 42,3 | 290 | 36,5 | 42,3 |
| 115 | 35,8 | 41,2 | 295 | 35,8 | 41,2 |
| 120 | 34,8 | 39,5 | 300 | 34,8 | 39,5 |
| 125 | 34,2 | 38,4 | 305 | 34,2 | 38,4 |
| 130 | 34,1 | 38,1 | 310 | 34,1 | 38,1 |
| 135 | 34,7 | 38,3 | 315 | 34,7 | 38,3 |
| 140 | 35,7 | 39,0 | 320 | 35,7 | 39,0 |
| 145 | 35,9 | 39,6 | 325 | 35,9 | 39,6 |
| 150 | 36,0 | 39,1 | 330 | 36,0 | 39,1 |
| 155 | 36,5 | 38,6 | 335 | 36,5 | 38,6 |
| 160 | 37,8 | 39,4 | 340 | 37,8 | 39,4 |
| 165 | 38,4 | 40,3 | 345 | 38,4 | 40,3 |
| 170 | 36,4 | 38,5 | 350 | 36,4 | 38,5 |
| 175 | 35,1 | 37,2 | 355 | 35,1 | 37,2 |

Tableau 4.2 : valeurs relatives

| Direction | Interne | Externe | | Direction | Interne | Externe |
|---|---|---|---|---|---|---|
| 0 | 34,7 | 1,9 | | 180 | 34,7 | 1,9 |
| 5 | 34,8 | 1,9 | | 185 | 34,8 | 1,9 |
| 10 | 35,8 | 1,9 | | 190 | 35,8 | 1,9 |
| 15 | 37,6 | 2,3 | | 195 | 37,6 | 2,3 |
| 20 | 38,3 | 1,8 | | 200 | 38,3 | 1,8 |
| 25 | 36,9 | 2,0 | | 205 | 36,9 | 2,0 |
| 30 | 36,3 | 2,6 | | 210 | 36,3 | 2,6 |
| 35 | 36,4 | 3,1 | | 215 | 36,4 | 3,1 |
| 40 | 36,5 | 2,7 | | 220 | 36,5 | 2,7 |
| 45 | 35,7 | 3,2 | | 225 | 35,7 | 3,2 |
| 50 | 35,1 | 4,1 | | 230 | 34,8 | 4,0 |
| 55 | 35,2 | 4,9 | | 235 | 34,6 | 4,6 |
| 60 | 35,6 | 5,2 | | 240 | 35,5 | 4,1 |
| 65 | 36,6 | 5,1 | | 245 | 36,5 | 3,6 |
| 70 | 37,5 | 5,4 | | 250 | 37,4 | 3,5 |
| 75 | 36,1 | 6,8 | | 255 | 36,0 | 4,5 |
| 80 | 34,8 | 8,1 | | 260 | 34,8 | 5,4 |
| 85 | 34,1 | 8,0 | | 265 | 34,1 | 4,9 |
| 90 | 33,9 | 8,0 | | 270 | 33,9 | 4,5 |
| 95 | 33,9 | 7,8 | | 275 | 33,9 | 7,8 |
| 100 | 34,3 | 7,9 | | 280 | 34,3 | 7,9 |
| 105 | 35,2 | 7,3 | | 285 | 35,2 | 7,3 |
| 110 | 36,5 | 5,8 | | 290 | 36,5 | 5,8 |
| 115 | 35,8 | 5,4 | | 295 | 35,8 | 5,4 |
| 120 | 34,8 | 4,7 | | 300 | 34,8 | 4,7 |
| 125 | 34,2 | 4,2 | | 305 | 34,2 | 4,2 |
| 130 | 34,1 | 3,9 | | 310 | 34,1 | 3,9 |
| 135 | 34,7 | 3,6 | | 315 | 34,7 | 3,6 |
| 140 | 35,7 | 3,3 | | 320 | 35,7 | 3,3 |
| 145 | 35,9 | 3,8 | | 325 | 35,9 | 3,8 |
| 150 | 36,0 | 3,1 | | 330 | 36,0 | 3,1 |
| 155 | 36,5 | 2,1 | | 335 | 36,5 | 2,1 |
| 160 | 37,8 | 1,6 | | 340 | 37,8 | 1,6 |
| 165 | 38,4 | 1,9 | | 345 | 38,4 | 1,9 |
| 170 | 36,4 | 2,1 | | 350 | 36,4 | 2,1 |
| 175 | 35,1 | 2,2 | | 355 | 35,1 | 2,2 |

**Revendications**

1. Module d'aide à l'étalonnage dans un dispositif de contrôle de produits métallurgiques (3) par ondes ultrasonores comprenant un banc (1), un capteur ultrasonore (5) et une électronique de commande et de traitement (6) reliée audit capteur (5), ledit module d'aide à l'étalonnage comprenant :

  - un tube-échantillon supporté par ledit banc (1) comprenant un réflecteur poly-directionnel (27) et un réflecteur directionnel (13 ;15 ;21 ;25) ;
  - de la mémoire (33) agencée pour stocker des données de travail relatives au tube-échantillon résultant de mesures ultrasonores réalisées sur le tube-échantillon dans lequel sont ménagés des réflecteurs ultrasonores, lesdites données de travail étant sous forme de couples valeur/angle, chaque couple correspondant à une amplitude de réflexion d'une onde ultrasonore dans une direction du tube-échantillon correspondant audit angle ;
  - un calculateur agencé pour exécuter une fonction de traitement (35) desdites données de travail stockées dans ladite mémoire (33) en vue d'obtenir des données utiles à l'étalonnage du dispositif de contrôle, stockées au moins temporairement dans ladite mémoire (33) ;
  **caractérisé en ce que** les données de travail sont regroupées en jeux de données, où chaque jeu de données caractérise la réponse ou le retour d'un réflecteur ultrasonore respectif, lesdits jeux de données sont organisés en :
  - un premier jeu de données (39) relatif à un réflecteur poly-directionnel (27) ménagé dans le tube-échantillon, les couples du premier jeu correspondant à des amplitudes de réponse à des ondes ultrasonores selon certaines au moins de directions de travail dudit réflecteur poly-directionnel (27), et
  - un second jeu de données (37) relatif à un réflecteur directionnel (13 ;15 ;21 ;25) ménagé dans le tube-échantillon, le second jeu de données comprenant, pour le réflecteur directionnel, au moins un couple correspondant à une amplitude de réponse à une onde ultrasonore selon une direction de travail dudit réflecteur directionnel,
  et **en ce que** la fonction de traitement (35) est agencée pour établir un troisième jeu de données (40) par interpolation des couples du premier jeu de données et du second jeu de données, les couples du troisième jeu correspondant à des amplitudes étalon pour des ondes ultrasonores selon certaines au moins des directions de travail du réflecteur poly-directionnel (27), ledit troisième jeu de données (40) étant stocké dans la mémoire (33).

2. Module selon la revendication 1, dans lequel le tube échantillon comprend plusieurs réflecteurs directionnels (13 ;15 ;21 ;25) et le second jeu de données (37) concernent lesdits réflecteurs directionnels (13 ;15 ;21 ;25) ménagés dans le tube échantillon, le second jeu de donnée (27) comprenant, pour chaque réflecteur directionnel (13 ;15 ;21 ;25), au moins un couple correspondant à une amplitude de réponse à une onde ultrasonore selon une direction de travail de ce réflecteur.

3. Module selon l'une des revendications 1 et 2, dans lequel la fonction de traitement (35) est agencée pour établir un ou plusieurs couples pour le second jeu de données (37), dont les angles respectifs correspondent à des directions de travail du réflecteur poly-directionnel (27), et dont les valeurs d'amplitude respectives sont calculées à partir des valeurs de couples correspondant du premier jeu (39).

4. Module selon l'une des revendications précédentes, dans lequel certaines au moins des valeurs d'amplitude du troisième jeu de données (40) sont calculées par interpolation d'une valeur comparative de valeurs d'amplitudes de couples du premier jeu de données (39) et de valeurs d'amplitude de couples du second jeu de données (37) dont les angles se correspondent mutuellement.

5. Module selon l'une des revendications précédentes, dans lequel l'interpolation comprend une régression linéaire.

6. Module selon l'une des revendications précédentes, dans lequel la fonction de traitement (35) est agencée pour établir un couple valeur/angle du troisième second jeu de données (40) pour chaque couple valeur/angle du premier jeu de données (39), l'angle du couple du troisième jeu de données (40) et l'angle du couple du premier jeu de données (39) se correspondant mutuellement.

7. Module selon l'une des revendications précédentes, dans lequel le réflecteur poly-directionnel (27) comprend un perçage de forme régulière dans le tube-échantillon.

8. Module selon l'une des revendications précédentes, dans lequel chaque réflecteur directionnel (13;15;21;25) comprend une entaille normalisée.

9. Module selon l'une des revendications précédentes, dans lequel la fonction de traitement (35) comprend en outre une fonction statistique agencée pour établir une valeur d'amplitude moyenne à partir de valeurs d'amplitudes de couples dont les angles correspondent à des directions mutuellement symétriques, et dans lequel la fonction de traitement (35) appelle cette fonction statistique avec les données de l'un au moins du premier jeu de données (39) et du second jeu de données (37).

10. Module selon la revendication 9, dans lequel la fonction de traitement (35) appelle la fonction statistique préalablement à l'interpolation.

11. Module selon l'une des revendications précédentes, dans lequel la fonction de traitement (35) comprend une fonction d'extraction capable d'opérer sur un ensemble de valeurs correspondant à des amplitudes de réponse d'un réflecteur directionnel (13;15;21;25) résultant d'inspections ultrasonores successives dirigées, dans le tube-échantillon, de façon analogue les unes aux autres pour établir une valeur d'amplitude caractéristique du réflecteur directionnel (13;15;21;25), et dans lequel cette valeur caractéristique est établie en tant que valeur-seuil qui permet d'obtenir au moins deux valeurs successives d'amplitude supérieures à cette valeur-seuil.

12. Procédé d'aide à l'étalonnage d'un dispositif de contrôle de produits métallurgiques (3) par ondes ultrasonores comprenant un banc (1), un capteur ultrasonore (5) et une électronique de commande et de traitement (6) reliée audit capteur (5), ledit procédé comprend les étapes suivantes :

- disposer un tube échantillon supporté par ledit banc (1) comprenant un réflecteur poly-directionnel (27) et un réflecteur directionnel (13 ;15 ;21 ;25) ;
- de stocker dans une mémoire (33) des données de travail relatives au tube-échantillon résultant de mesures ultrasonores réalisées sur le tube-échantillon dans lequel sont ménagés des réflecteurs ultrasonores, lesdites données de travail étant sous forme de couples valeur/angle, chaque couple correspondant à une amplitude de réflexion d'une onde ultrasonore dans une direction du tube-échantillon correspondant audit angle ;
- exécuter par un calculateur une fonction de traitement (35) desdites données de travail stockées dans ladite mémoire (33) en vue d'obtenir des données utiles à l'étalonnage du dispositif de contrôle, stockées au moins temporairement dans ladite mémoire (33) ;

**caractérisé en ce que** l'on regroupe les données de travail en jeux de données, où chaque jeu de données caractérise la réponse ou le retour d'un réflecteur ultrasonore respectif, lesdits jeux de données sont organisés en :

- un premier jeu de données (39) sous la forme de couples valeur/angle, le premier jeu de données étant relatif à un réflecteur poly-directionnel (27) ménagé dans le tube-échantillon, les couples valeur/angle du premier jeu de données correspondant à des amplitudes de réponse à des ondes ultrasonores selon certaines au moins de directions de travail du réflecteur poly-directionnel (27) correspondant audit angle, et
- un second jeu de données (37) sous la forme de couples valeur/angle, le second jeu de données étant relatif à un réflecteur directionnel (13 ;15 ;21 ;25) ménagé dans le tube-échantillon, le second jeu de données comprenant, pour le réflecteur directionnel, au moins un couple valeur/angle correspondant à une amplitude de réponse à une onde ultrasonore selon une direction de travail du réflecteur directionnel correspondant audit angle,
- et **caractérisé en ce que** l'on établit un troisième jeu de données (40), sous la forme de couples valeur/angle, par interpolation des couples du premier jeu de données et du second jeu de données, les couples du troisième jeu correspondant à des amplitudes étalon pour des inspections ultrasonores selon certaines au moins des directions de travail du réflecteur poly-directionnel.

**Patentansprüche**

1. Modul zur Hilfe bei der Kalibrierung in einer Vorrichtung zur Prüfung von metallurgischen Produkten (3) durch Ultraschallwellen mit einer Bank (1), einem Ultraschallsensor (5) und einer Steuer- und Verarbeitungselektronik (6), die mit dem Sensor (5) verbunden ist, wobei das Modul zur Hilfe bei der Kalibrierung Folgendes umfasst:

- ein Probenrohr, das durch die Bank (1) abgestützt wird, mit einem polydirektionalen Reflektor (27) und einem direktionalen Reflektor (13; 15; 21; 25);

- einen Speicher (33), der dazu beschaffen ist, Arbeitsdaten in Bezug auf das Probenrohr zu speichern, die sich aus Ultraschallmessungen ergeben, die an dem Probenrohr ausgeführt werden, in dem Ultraschallreflektoren eingerichtet sind, wobei die Arbeitsdaten in Form von Wert/Winkel-Paaren vorliegen, wobei jedes Paar einer Reflexionsamplitude einer Ultraschallwelle in einer Richtung des Probenrohrs, die dem Winkel entspricht, entspricht;
- einen Rechner, der dazu beschaffen ist, eine Verarbeitungsfunktion (35) der Arbeitsdaten auszuführen, die in dem Speicher (33) gespeichert sind, um für die Kalibrierung der Prüfvorrichtung nützliche Daten zu erhalten, die zumindest vorübergehend in dem Speicher (33) gespeichert werden;

**dadurch gekennzeichnet, dass** die Arbeitsdaten in Datensätze gruppiert werden, wobei jeder Datensatz die Antwort oder die Rückmeldung eines jeweiligen Ultraschallreflektors charakterisiert, wobei die Datensätze organisiert werden in:

- einen ersten Datensatz (39) in Bezug auf einen polydirektionalen Reflektor (27), der in dem Probenrohr eingerichtet ist, wobei die Paare des ersten Datensatzes Antwortamplituden auf Ultraschallwellen in zumindest bestimmten von Arbeitsrichtungen des polydirektionalen Reflektors (27) entsprechen, und
- einen zweiten Datensatz (37) in Bezug auf einen direktionalen Reflektor (13; 15; 21; 25), der in dem Probenrohr eingerichtet ist, wobei der zweite Datensatz für den direktionalen Reflektor mindestens ein Paar umfasst, das einer Antwortamplitude auf eine Ultraschallwelle in einer Arbeitsrichtung des direktionalen Reflektors entspricht,

und dass die Verarbeitungsfunktion (35) dazu eingerichtet ist, einen dritten Datensatz (40) durch Interpolation der Paare des ersten Datensatzes und des zweiten Datensatzes zu erstellen, wobei die Paare des dritten Datensatzes Standardamplituden für Ultraschallwellen in zumindest bestimmten der Arbeitsrichtungen des polydirektionalen Reflektors (27) entsprechen, wobei der dritte Datensatz (40) im Speicher (33) gespeichert wird.

2. Modul nach Anspruch 1, wobei das Probenrohr mehrere direktionale Reflektoren (13; 15; 21; 25) umfasst und der zweite Datensatz (37) die direktionalen Reflektoren (13; 15; 21; 25) betrifft, die im Probenrohr eingerichtet sind, der zweite Datensatz (27) für jeden direktionalen Reflektor (13; 15; 21; 25) mindestens ein Paar umfasst, das einer Antwortamplitude auf eine Ultraschallwelle in einer Arbeitsrichtung dieses Reflektors entspricht.

3. Modul nach einem der Ansprüche 1 und 2, wobei die Verarbeitungsfunktion (35) dazu beschaffen ist, ein oder mehrere Paare für den zweiten Datensatz (37) zu erstellen, deren jeweilige Winkel Arbeitsrichtungen des polydirektionalen Reflektors (27) entsprechen, und deren jeweilige Amplitudenwerte anhand der Werte von entsprechenden Paaren des ersten Datensatzes (39) berechnet werden.

4. Modul nach einem der vorangehenden Ansprüche, wobei zumindest bestimmte der Amplitudenwerte des dritten Datensatzes (40) durch Interpolation eines Vergleichswerts von Amplitudenwerten von Paaren des ersten Datensatzes (39) und Amplitudenwerten von Paaren des zweiten Datensatzes (37), deren Winkel einander entsprechen, berechnet werden.

5. Modul nach einem der vorangehenden Ansprüche, wobei die Interpolation eine lineare Regression umfasst.

6. Modul nach einem der vorangehenden Ansprüche, wobei die Verarbeitungsfunktion (35) dazu beschaffen ist, ein Wert/Winkel-Paar des dritten Datensatzes (40) für jedes Wert/Winkel-Paar des ersten Datensatzes (39) zu erstellen, wobei der Winkel des dritten Datensatzes (40) und der Winkel des Paars des ersten Datensatzes (39) einander entsprechen.

7. Modul nach einem der vorangehenden Ansprüche, wobei der polydirektionale Reflektor (27) eine Bohrung mit regelmäßiger Form in dem Probenrohr umfasst.

8. Modul nach einem der vorangehenden Ansprüche, wobei jeder direktionale Reflektor (13; 15; 21; 25) eine normierte Kerbe umfasst.

9. Modul nach einem der vorangehenden Ansprüche, wobei die Verarbeitungsfunktion (35) außerdem eine statistische Funktion umfasst, die dazu beschaffen ist, einen mittleren Amplitudenwert anhand von Amplitudenwerten von Paaren zu erstellen, deren Winkel zueinander symmetrischen Richtungen entsprechen, und wobei die Verarbeitungsfunktion (35) diese statistische Funktion mit den Daten von zumindest einem des ersten Datensatzes (39) und des zweiten Datensatzes (37) aufruft.

**10.** Modul nach Anspruch 9, wobei die Verarbeitungsfunktion (35) die statistische Funktion vor der Interpolation aufruft.

**11.** Modul nach einem der vorangehenden Ansprüche, wobei die Verarbeitungsfunktion (35) eine Extraktionsfunktion umfasst, die eine Gesamtheit von Werten bearbeiten kann, die Antwortamplituden eines direktionalen Reflektors (13; 15; 21; 25) entsprechen, die sich aus aufeinander folgenden Ultraschalluntersuchungen ergeben, die in dem Probenrohr in analoger Weise zueinander gerichtet sind, um einen charakteristischen Amplitudenwert des direktionalen Reflektors (13; 15; 21; 25) zu erstellen, und wobei dieser charakteristische Wert als Schwellenwert erstellt wird, der es ermöglicht, zumindest zwei aufeinander folgende Amplitudenwerte zu erhalten, die höher sind als dieser Schwellenwert.

**12.** Verfahren zur Hilfe bei der Kalibrierung einer Vorrichtung zur Prüfung von metallurgischen Produkten (3) durch Ultraschallwellen mit einer Bank (1), einem Ultraschallsensor (5) und einer Steuer- und Verarbeitungselektronik (6), die mit dem Sensor (5) verbunden ist, wobei das Verfahren die folgenden Schritte umfasst:

- Anordnen eines Probenrohrs, das durch die Bank (1) abgestützt wird, mit einem polydirektionalen Reflektor (27) und einem direktionalen Reflektor (13; 15; 21; 25);
- Speichern von Arbeitsdaten in Bezug auf das Probenrohr, die sich aus Ultraschallmessungen ergeben, die an dem Probenrohr ausgeführt werden, in dem Ultraschallreflektoren eingerichtet sind, in einem Speicher (33), wobei die Arbeitsdaten in Form von Wert/Winkel-Paaren vorliegen, wobei jedes Paar einer Reflexionsamplitude einer Ultraschallwelle in einer Richtung des Probenrohrs, die dem Winkel entspricht, entspricht;
- Ausführen einer Verarbeitungsfunktion (35) der Arbeitsdaten, die in dem Speicher (33) gespeichert sind, durch einen Rechner, um für die Kalibrierung der Prüfvorrichtung nützliche Daten zu erhalten, die zumindest vorübergehend in dem Speicher (33) gespeichert werden;

**dadurch gekennzeichnet, dass** die Arbeitsdaten in Datensätze gruppiert werden, wobei jeder Datensatz die Antwort oder die Rückmeldung eines jeweiligen Ultraschallreflektors charakterisiert, wobei die Datensätze organisiert werden in:

- einen ersten Datensatz (39) in Form von Wert/Winkel-Paaren, wobei der erste Datensatz auf einen polydirektionalen Reflektor (27) bezogen ist, der in dem Probenrohr eingerichtet ist, wobei die Wert/Winkel-Paare des ersten Datensatzes Antwortamplituden auf Ultraschallwellen in zumindest bestimmten von Arbeitsrichtungen des polydirektionalen Reflektors (27) entsprechen, die dem Winkel entsprechen, und
- einen zweiten Datensatz (37) in Form von Wert/Winkel-Paaren, wobei der zweite Datensatz auf einen direktionalen Reflektor (13; 15; 21; 25) bezogen ist, der in dem Probenrohr eingerichtet ist, wobei der zweite Datensatz für den direktionalen Reflektor mindestens ein Wert/Winkel-Paar umfasst, das einer Antwortamplitude auf eine Ultraschallwelle in einer Arbeitsrichtung des direktionalen Reflektors entspricht, die dem Winkel entspricht,
- und **dadurch gekennzeichnet, dass** ein dritter Datensatz (40) in Form von Wert/Winkel-Paaren durch Interpolation der Paare des ersten Datensatzes und des zweiten Datensatzes erstellt wird, wobei die Paare des dritten Satzes Standardamplituden für Ultraschalluntersuchungen in zumindest bestimmten der Arbeitsrichtungen des polydirektionalen Reflektors entsprechen.

**Claims**

**1.** Module to help in the calibration in a device for inspection of metallurgical products (3) with ultrasound waves comprising a bench (1) an ultrasound sensor (5) and a control and processing electronics (6) connected to said sensor (5), said Module to help in the calibration comprising:

- a sample pipe supported by said bench (1) comprising a polydirectional reflector (27) and a directional reflector (13;15;21;25);
- memory (33) arranged for storing data in the form of value/angle pairs, each pair corresponding to an amplitude of response to an ultrasound inspection in a direction of the metallurgical product corresponding to said angle;
- a calculator arranged to perform a processing function (35) on the stored data;

**characterized in that** the data are organized into:

- a first set of data (39) involving a polydirectional reflector (27) disposed in the metallurgical product, the pairs of the first set corresponding to amplitudes of response to ultrasound inspections along at least some of the working directions of the polydirectional reflector (27), and
- a second set of data (37) involving a directional reflector (13;15;21;25) disposed in the metallurgical product, the second set of data comprising, for the directional reflector, at least one pair corresponding to an amplitude of response to an ultrasound inspection along one working direction of the reflector,

and **in that** the processing function (35) is disposed to establish a third set of data (40) by interpolation of pairs of the first set of data and the second set of data, the pairs of the third set corresponding to standard amplitudes for ultrasound inspections along at least some of the working directions of the polydirectional reflector (27), said third set off data (40) being stored in memory (33).

2. Module according to claim 1, in which the sample pipe comprises several directional reflectors (13;15;21;25) and the second set of data (37) concerns said directional reflectors (13;15;21;25) disposed in the metallurgical product (3), the second set of data (27) comprising, for each directional reflector (13;15;21;25), at least one pair corresponding to an amplitude of response to an ultrasound inspection along one working direction of this reflector.

3. Module according to one of claims 1 and 2, in which the processing function (35) is disposed to establish one or more pairs for the second set of data (37) whose respective angles correspond to working directions of the polydirectional reflector (27), and whose respective amplitude values are calculated from values of pairs corresponding to the first set (39).

4. Module according to one of the preceding claims, in which at least some of the amplitude values of the third set of data (40) are calculated by interpolation of a comparative amplitude value, values of pairs of the first set of data (39) and amplitude values of pairs of the second set of data (37) having mutually corresponding angles.

5. Module according to one of the preceding claims, in which the interpolation involves a linear regression.

6. Module according to one of the preceding claims, in which the processing function (35) is disposed to establish a value/angle pair of the third set of data (40) for each value/angle pair of the first set of data (39), the angle of the pair of the third set of data (40) and the angle of the pair of the first set of data (39) corresponding to each other.

7. Module according to one of the preceding claims, in which the polydirectional reflector (27) comprises a boring of regular shape in the metallurgical product.

8. Module according to one of the preceding claims, in which each directional reflector (13;15;21;25) comprises a standardized notch.

9. Module according to one of the preceding claims, in which the processing function (35) furthermore comprises a statistical function disposed to establish a mean amplitude value from amplitude values of pairs whose angles correspond to mutually symmetrical directions, and in which the processing function (35) calls up this statistical function with the data of at least one of the first set of data (39) and the second set of data (37).

10. Module according to claim 9, in which the processing function (35) calls up the statistical function prior to the interpolation.

11. Module according to one of the preceding claims, in which the processing function (35) comprises an extraction function able to operate on a group of values corresponding to amplitudes of response of a directional reflector (13;15;21;25) resulting from successive ultrasound inspections directed, in the metallurgical product, in similar fashion to each other in order to establish a characteristic amplitude value of the directional reflector (13;15;21;25), and in which this characteristic value is established as a threshold value making it possible to obtain at least two successive amplitude values greater than this threshold value.

12. Method to aid in the calibration of an inspection device for metallurgical products (3) with ultrasound waves comprising a bench (1) an ultrasound sensor (5) and a control and processing electronics (6) connected to said sensor (5), **characterized in that** it involves the following steps:

- Arranging a sample tube supported by said bench (1) comprising a polydirectional reflector (27) and a directional reflector (13; 15; 21; 25);
- storing in a memory (33) working data relating to the sample tube resulting from ultrasonic measurements carried out on the sample tube in which ultrasonic reflectors are provided, said working data being in the form of value / angle pairs, each pair corresponding to an amplitude of reflection of an ultrasonic wave in one direction of the sample tube corresponding to said angle;

- **characterized in that** the working data is grouped into data sets, where each data set characterizes the response or the feedback of a respective ultrasonic reflector, said data sets are organized in:

- a first set of data (39) in the form of value/angle pairs, the first set of data concerning a polydirectional reflector (27) disposed in the sample pipe, the value/angle pairs of the first set of data corresponding to amplitudes of response to ultrasound inspections along at least some of the working directions of the polydirectional reflector (27) corresponding to said angle,

- a second set of data (37) in the form of value/angle pairs, the second set of data concerning a directional reflector (13;15;21;25) disposed in the sample pipe, the second set of data comprising, for the directional reflector, at least one value/angle pair corresponding to an amplitude of response to an ultrasound inspection along one working direction of the reflector corresponding to said angle,

- and **characterized in that** is established a third set of data (40), in the form of value/angle pairs, by interpolation of the pairs of the first set of data and the second set of data, the pairs of the third set corresponding to standard amplitudes for ultrasound inspections along at least some of the working directions of the polydirectional reflector.

**Fig.1**

**Fig.2**

EP 3 278 097 B1

Fig. 3

Fig. 4

Fig. 5

Fig. 6

INIT  70

Pre traitement de données relatives
à des réflecteurs omnidirectionnel et/our unidirectionnels  72

Traitement statistique des données relatives
aux réflecteurs omindirectionnels et/ou unidirectionnels  74

Comparaison des données traitées à des données de paramètres  76

Fig. 7

INIT 80

Calcul d'une ou plusieurs premières valeurs de gain
associées chacune à une direction 82

Calcul de secondes valeurs de gain
pour des directions supplémentaires
par interpolation des premières valeurs de gain 84

Calcul de valeurs d'amplitude
associées chacune à une direction 86

# Fig. 8

INIT  900

MES_GAIN[n]  902

i:= 0  904

i:= i +1  906

908  N_AMP[i] > 0  0

1

MES_GAIN[i] := 20 x log(N_AMP[i]/H_AMP[i])  910

MES_GAIN[i] := 0  912

1  i < n  914

0

STOP  916

Fig. 9

INIT — 1000

SIM_GAIN[n] — 1002

i := 0
j := 0
k := 0 — 1004

i := i + 1 — 1006

1008 — MES_GAIN[i] > 0

0 → k := i + 1 — 1012

1 ↓

SIM_GAIN[i] := MES_GAIN[i]
j := i — 1010

1014 — MES_GAIN[k] > 0 — 0

1

1016

SIM_GAIN[i] := MES_GAIN[j] +
(( MES_GAIN[k] - MES_GAIN[j] ) / (DIRECT[k] - DIRECT[j] ) ) x ( DIRECT[i] - DIRECT[j] )

1 — i < n — 1018

0

STOP — 1020

FIG. 10

INIT  1100

SIM_AMP[n]  1102

i := 0  1104

i := i + 1  1106

SIM_AMP[i] := H_AMP[i] x puissance(10, SIM_GAIN[i] / 20)  1108

i < n  1110

STOP  1112

FIG. 11

INIT   1200

RX_GAIN[n]   1202

i := 0   1204

i := i + 1   1206

RX_GAIN[i] := 20*LOG(TA/SIM_AMP[i])+IG   1208

1

i < n   1210

0

STOP   1212

FIG. 12

INIT 1300

TH := 0 1302

i := 0 1304

AMPMINI : = min( AMP[i], ..., AMP[i + R]) 1306

i := i + 1 1308

AMPMINI > TH 1310

TH := AMPMINI 1312

i < k 1314

STOP 1316

FIG. 13

Amplitude

Fig. 14

Fig. 15

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 200350527 A
- FR 3000212

- US 4757716 A